# EUROPEAN PATENT SPECIFICATION

(11) **EP 3 283 450 B1**
(45) Date of publication and mention of the grant of the patent: **18.11.2026**
(21) Application number: 16780923.5
(22) Date of filing: 15.04.2016
(51) Int. Cl.: C04B 35/10, C04B 35/119, C04B 35/44, C04B 35/48, C04B 35/64, F27B 17/02, F27B 21/02, F27D 5/00, C04B 35/486, C04B 35/488, H01M 10/052, H01M 10/0562, H01M 10/0585

(54) **SETTER PLATES FOR SOLID ELECTROLYTE FABRICATION AND METHODS OF USING THE SAME TO PREPARE DENSE SOLID ELECTROLYTES**
BRENNHILFSMITTEL ZUR FESTELEKTROLYTHERSTELLUNG UND VERFAHREN ZUR VERWENDUNG DAVON ZUR HERSTELLUNG DICHTER FESTKÖRPERELEKTROLYTE
PLAQUES D'ENFOURNEMENT POUR LA FABRICATION D'UN ÉLECTROLYTE SOLIDE ET PROCÉDÉS D'UTILISATION DE CELLES-CI POUR PRÉPARER DES ÉLECTROLYTES SOLIDE DENSES

(30) Priority: 16.04.2015 US 201562148337 P
(43) Date of publication of application: 21.02.2018
(73) Proprietor: QuantumScape Battery, Inc., San Jose, CA 95110 (US)
(72) Inventor: IYER, Sriram, San Jose, California 95110 (US); HOLME, Tim, San Jose, California 95110 (US); DONNELLY, Niall, San Jose, California 95110 (US); XU, Gengfu, San Jose, California 95110 (US); CHOI, Anna, San Jose, California 95110 (US)
(74) Representative: HGF
(86) International application number: PCT/US2016/027922
(87) International publication number: WO 2016/168723

(56) References cited:
- JP-A- 2004 063 261
- US-A- 4 340 436
- US-A- 5 620 637
- US-A- 5 620 637
- US-A1- 2002 054 419
- US-A1- 2009 197 172
- US-A1- 2011 281 175
- US-A1- 2014 060 723
- US-A1- 2014 134 483
- US-A1- 2014 134 483
- US-A1- 2015 099 190
- US-A1- 2015 099 190

## Description

This application claims priority to, and the benefit of, US Provisional Patent Application No. 62/148,337, filed April 16, 2015, titled LITHIUM STUFFED GARNET SETTER PLATES FOR SOLID ELECTROLYTE FABRICATION.

### BACKGROUND

Cleaner forms of storing energy are in great demand. Examples of clean energy storage include rechargeable lithium (Li) ion batteries *(i.e.,* Li-secondary batteries), in which Li⁺ ions move from a negative electrode to a positive electrode during discharge. In numerous applications (*e.g.,* portable electronics and transportation), it would be advantageous to use a solid state Li ion battery which includes solid state materials such as solid state electrolytes as opposed to one that includes liquid components, (*e.g.,* flammable liquid electrolytes). Using entirely solid state components improves battery safety and energy density, the latter of which is due in part to reduced electrode and electrolyte volume and weight.

Components of a solid state battery include the electrolyte, which electrically isolates the positive and negative electrodes, a catholyte, which is intimately mixed with a positive electrode active material to improve the ionic conductivity therein. A third component, in some Li ion batteries, is an anolyte which is laminated to, or in contact with, an anode material (*i.e.,* negative electrode material; *e.g.,* Li-metal). Currently available electrolyte, catholyte, and anolyte materials, however, are not stable within, or otherwise suitable for use with, solid state battery operating voltage ranges or when in contact with certain cathode or anode active materials such as lithium metal anodes.

Garnet (*e.g.,* Li-stuffed garnet) is a class of oxides that has the potential to be suitable for use as one or more of a catholyte, an electrolyte, and an anolyte in a solid state battery. However, garnet materials have yet to be prepared with the proper morphology (*e.g.,* thin film or nanostructured powder which can be sintered into sufficiently dense films or pellets), with sufficient conductivity or particle connectivity to function in commercial applications. Certain garnet materials and processing techniques are known (*e.g., See* U.S. Patent Nos. 5,840,436; 8,658,317; 8,092,941; and 7,901,658; or U.S. Patent Application Publication Nos. 2013/0085055; 2011/0281175; 2014/0093785; 2014/0134483; 2015/0099190; 2014/0060723; 2009/0197172; 2010/00119800 and 2014/0170504; International Patent Application Publication Nos. WO 2010/0051345; 2010/096370or also Bonderer, et al., Journal of the American Ceramic Society, 2010, 93(11):3624 - 3631; and Murugan, et al., Angew Chem. Int. Ed. 2007, 46, 7778-7781), but these materials and techniques suffer from a variety of deficiencies. The electrolyte films made by these techniques have insufficient Li⁺ ion conductivity and/or cycle life at high current density and/or low temperatures for use in commercial applications, and these techniques are not compatible with many battery components.

Certain oxide sintering techniques are known (*e.g.,* US Patent Nos. 5,628,849; 6,447,712; and 5620637) but these methods are not directly applicable to sintering lithium-stuffed garnet oxides. When used to sinter lithium-stuffed oxides, the techniques known in the art lead to oxide films which do not retain the proper lithium-stuffed garnet chemical composition or crystal structure, do not have sufficient mechanical integrity for use in a device, or otherwise are not sufficiently dense, lacking in defects, or ionically conductive such that they can accommodate high Li⁺ current densities without forming lithium dendrites.

Accordingly, there is a need for improved methods of making and processing solid electrolytes such as sintered lithium-stuffed garnet electrolytes.

### SUMMARY

The present invention is directed to a setter plate for fabricating solid electrolytes of a rechargeable battery, which is e.g. described in JP3973204B2, wherein the setter plate is a composite setter plate, said composite setter plate comprising an inert refractory material and a lithium source material; wherein the setter has a mass areal density of about 0.2 g/cm² to about 4 g/cm², wherein the inert refractory material is at least one member selected from Al₂O₃, LiAlO₂, LaAlO₃, ZrO₂, La₂O₃, Li₂ZrO₂, Li₂TiO₃ or the derivatives thereof, and wherein the lithium source material is lithium-stuffed garnet oxide characterized by the formula LiₓLa_{y}Zr_{z}Oₜ·qAl₂O₃, wherein 4<x<10, 1<y<4, 1<z<3, 6<t<14, and 0≤q≤1.

The present disclosure relates generally to the fabrication of components for lithium rechargeable batteries. Specifically, the present disclosure relates to the fabrication of setter plates which include lithium stuffed garnet oxides and to the use of these setter plates to sinter solid electrolytes or solid electrodes for lithium rechargeable batteries. In some examples, the setter plates described herein are useful for preparing thin, dense films of lithium-stuffed garnet oxides which are highly Li⁺ion conductive and have a low area-specific resistance (ASR).

The setter plates described herein reduce the chemical potential for Li to diffuse or migrate out of the sintering solid electrolyte (*i*.*e*., herein a "green film" before it is completely sintered) and into the setter plate or the surrounding atmosphere, thereby preserving the chemical composition of the sintered electrolyte. Furthermore, surprisingly, the thin film Li-stuffed garnet solid electrolytes produced using Li-stuffed garnet containing setter plates of a same, or similar, composition, and as set forth herein, have superior ionic conductivity, also superior mechanical integrity (*e.g.,* lower areal crack density, lower variation in surface roughness), smaller and more uniform thicknesses, and also release from the setter plates post-sintering better than when compared to Li-stuffed solid electrolytes sintered between conventional setter plates which have a different chemical composition or Li activity than does the green film or the solid electrolyte formed therefrom once sintered.

The disclosure herein sets forth, *inter alia,* setter plates useful for fabricating solid electrolytes of a rechargeable battery. The setter plates described herein provide a surface, on top of which, a green film including lithium-stuffed garnets or the chemical precursors thereto may be sintered. In some examples, the setter plates described herein provide surfaces, between which, a green film including lithium-stuffed garnets or the chemical precursors thereto may be sintered. By sintering a green film using the setter plates set forth herein, the chemical composition of the sintering film is controlled. The chemical composition of the sintering film is controlled, in part, because the setter plates described herein maintain the appropriate Li activity or Li chemical potential between the sintering films and the setter plate in contact therewith. The chemical composition of the sintering film is controlled, in part, because the setter plates described herein maintain the appropriate Li activity or Li chemical potential between the sintering films and the atmosphere in contact therewith.

Also set forth herein are stacked, repeated units setter plates having green films therebetween which are useful for large scale processing of solid electrolytes. In some of these examples, each unit includes at least two setters and a green film positioned between the setters and in contact with each of the at least two setters. In some examples, several or more of these units, each which include two setters and a film in between the setters, are arranged in arrays. In some examples, the arrays are stacked. In some examples, the units are stacked into columns.

In some examples, the setters are composite setter plates which include one or more setter plates stacked together or placed in close proximity with each other. In some examples, the composite setter plates include two more materials formulated together into a single setter plate. In some examples, each composite setter includes at least one member selected from an inert refractory material, such as, but not limited to Al₂O₃, LiAlO₂, LaAlO₃, ZrO₂, La₂O₃, Li₂ZrO₂, Li₂TiO₃ or the derivatives thereof, and at least one member selected from a lithium source, such as, but not limited to a lithium-stuffed garnet oxide characterized by the formula LiₓLa_{y}Zr_{z}Oₜ·qAl₂O₃, wherein 4<x<10, 1<y<4, 1<z<3, 6<t<14, and 0≤q≤1, Li₂O, Li, Li₅AlO₄, LiAl₅O₈, LiAlO₂, Li₂SiO₃, Li₄SiO₄, Li₂SnO₃, LiNbO₃, Li₄TiO₄, Li₂TiO₃, Li₂ZrO₃, Li₈PbO₆, the derivatives thereof, or combinations thereof. When used to sinter lithium-stuffed garnet electrolytes, these composite setters prevent the adhesion of the sintering film to the setter plate while also providing the correct Li activity in the vicinity of the sintering film such that the chemical composition of the sintering film is controlled. The composite setters in some examples include a coating on the surface which interfaces with the sintering film. In some examples, this coating includes ZrO₂, LiAlO₂, LaAlO₃, Al₂O₃, ZrO₂, La₂O₃, Li₂ZrO₂, Li₂TiO₃ or the derivatives thereof. In some examples, the composite setters set forth herein, when used to sinter green films to make lithium-stuffed garnet solid electrolytes, maintain a sufficient Li vapor pressure at sintering garnet thin film interface such that the chemical composition and/or crystal structure of the lithium-stuffed garnet is maintained during and after the sintering. In some examples, this sufficient Li vapor pressure is 1 x 10 to 1 x 10⁻³ Pa of Li, LiO, or Li₂O. In some examples, this sufficient Li vapor pressure is a partial pressure of 1 x 10 to 1 x 10⁻³ Pa of Li, LiO, or Li₂O in a mixture with the remainder being Argon. In some examples, this sufficient Li vapor pressure is a partial pressure of 1 x 10 to 1 x 10⁻³ Pa of Li, LiO, or Li₂O in a mixture with the remainder being Argon:H₂. In some examples, this sufficient Li vapor pressure is a partial pressure of 1 x 10 to 1 x 10⁻³ Pa of Li, LiO, or Li₂O in a mixture with the remainder being Argon:H₂:H₂O. In some examples, this sufficient Li vapor pressure is a partial pressure of 1 x 10 to 1 x 10⁻³ Pa of Li, LiO, or Li₂O in a mixture with the remainder being N₂. In some examples, this sufficient Li vapor pressure is a partial pressure of 1 x 10 to 1 x 10⁻³ Pa of Li, LiO, or Li₂O in a mixture with the remainder being N₂:H₂. In some examples, this sufficient Li vapor pressure is a partial pressure of 1 x 10 to 1 x 10⁻³ Pa of Li, LiO, or Li₂O in a mixture with the remainder being H₂. In some examples, the composite setters set forth herein, when used to sinter green films to make lithium-stuffed garnet solid electrolytes, prevent the sintering film from sticking, bonding, or adhering to setter plate completely or locally.

The setter plates of the invention are defined by the claims and are in some examples thin monoliths of a Li-stuffed garnet oxide characterized by the formula LiₓLa_{y-}Zr_{z}Oₜ·qAl₂O₃, wherein 4<x<10, 1<y<4, 1<z<3, 6<t<14, and 0≤q≤1. The value of subscript t is selected such that the garnet oxide characterized by the formula LiₓLa_{y}Zr_{z}Oₜ·qAl₂O₃ is charge neutral. Any subscript values not specified are limited to those subscript values which result in a charge neutral compound description. In some examples, q is 0.1. In some examples, q is 0.2. In some examples, q is 0.3. In some examples, q is 0.4. In some examples, q is 0.5. In some examples, q is 0.6. In some examples, q is 0.7. In some examples, q is 0.8. In some examples, q is 0.9. In some examples, q is 1.0. In some examples, q is 0.21. In some examples, q is 0.22. In some examples, q is 0.23. In some examples, q is 0.24. In some examples, q is 0.25. In some examples, q is 0.26. In some examples, q is 0.27. In some examples, q is 0.28. In some examples, q is 0.29. In some examples, q is 0.91. In some examples, q is 0.92. In some examples, q is 0.93. In some examples, q is 0.94. In some examples, q is 0.95. In some examples, q is 0.96. In some examples, q is 0.97. In some examples, q is 0.98. In some examples, q is 0.99. In certain examples, these setter plates have a surface defined by a first lateral dimension from about 5 cm to about 20 cm and a second lateral dimension from about 5 cm to about 20 cm; and a thickness from about 1 mm to about 100 mm. Depending on the dimensions of a given rechargeable battery for which the setter plate is used to make a sintered garnet electrolyte, these setter plates can be increased in size (e.g., surface area increased). For example, depending on the dimensions of a given rechargeable battery for which the setter plate is used to make a sintered garnet electrolyte, the setter side is about 10 cm by 7 cm, or also 4 cm by 4 cm, also up to 15 cm by 25 cm, or even up to 96 cm by 96 cm in order to prepare electrolytes having larger dimensions than the particular Examples and embodiments described herein. A variety of sizes of setter plates may be prepared in accordance with the features described herein.

Also set forth herein but not recited by the wording of the claims are methods of making setter plates. In some examples, the method of making a Li-stuffed garnet setter plate include mixing lithium-stuffed garnets and/or the chemical precursors thereto, to form a mixture, in proportions sufficient to produce, upon reaction, a Li-stuffed garnet compound having a composition of
LiₓLa_{y}Zr_{z}Oₜ·qAl₂O₃, wherein 4<x<10, 1<y<4, 1<z<3, 6<t<14, and 0≤q≤1. The subscripts x, y, z, and t, and the coefficient, q, are selected so that the compound is charge neutral. Optionally the method further includes calcining the mixture. Optionally the method further includes milling the mixture before calcining the mixture. Optionally the methods include milling the mixture after calcining the mixture. Optionally the methods include milling the mixture before and after calcining the mixture. Optionally the methods include forming (*e.g.,* pressing) the milled precursor materials into a pellet or setter plate including the Li-stuffed garnet; placing the pellet or setter plate onto a substrate; sintering the pellet at a temperature of from 450°C to 1300 °C; and optionally cooling the pellet in air at 1 atmosphere of pressure and 25 °C. Optionally the sintering is at a temperature of at least 1000 °C. Optionally the sintering is at a temperature of at least 1000 °C and less than 1300 °C.

In some other descriptions provided herein of methods of making setter plates, the methods include the following steps. In a first step, garnet precursor chemicals are mixed to form a mixture. Optionally during this first step, the garnet precursor chemicals are mixed with other oxide or oxide precursor chemicals to form a mixture. In a second step, the mixture is milled. Optionally the mixture is milled to reduce the particle size and/or increase the surface area of the precursor chemicals. Optionally the precursor chemicals are not calcined. Optionally the mixture is formed into a form factor suitable for use as a setter plate. Optionally the form factor is sintered to form a setter plate.

In some of the methods of making composite setter plates described herein but not recited by the wording of the claims the methods include mixing an inert refractory material with a lithium source material to form a mixture. Optionally the ratio of the inert refractory material to the lithium source material is 90:10, 80:20, 70:30, 60:40, 50:50, 40:50, 30:70, 20:80, or 10:90. Optionally the methods include balling milling the mixture, adding a binder to the mixture, milling the mixture with the binder, and then forming a setter plate form factor from the milled mixture. Optionally the composite setter plate is then prepared by heating the form factor under sintering conditions to densify the composite setter. Optionally the inert refractory material is Al₂O₃, LiAlO₂, LaAlO₃, ZrO₂, La₂O₃, Li₂ZrO₂, Li₂TiO₃, the derivatives thereof, or combinations thereof. Optionally the lithium source material is a lithium-stuffed garnet set forth herein, Li₂O, Li, LisAlO₄, LiAl₅O₈, LiAlO₂, Li₂SiO₃, Li₄SiO₄, Li₂SnO₃, LiNbO₃, Li₄TiO₄, Li₂TiO₃, Li₂ZrO₃, Li₈PbO₆, the derivatives thereof, or combinations thereof. Optionally the composite setters may be, but are not limited to, Li₂ZrO₃ and Li₂TiO₃; or LiAlO₂ and a Li-stuffed garnet compound having a composition of LiₓLa_{y-} Zr_{z}Oₜ·qAl₂O₃, wherein 4<x<10, 1<y<4, 1<z<3, 6<t<14, and 0≤q≤1. The subscripts x, y, z, and t, and the coefficient, q, are selected so that the compound is charge neutral. Optionally the composite setter includes LiAlO₂ and Li₂ZrO₃. Optionally the composite setter includes LiAlO₂ and Li₂ZrO₃ and a lithium-stuffed garnet. Optionally the composite setter includes LiAlO₂ and a lithium-stuffed garnet.

In some of the methods described herein but not recited by the wording of the claims, the composite setters, when heated above 1000°C, above 1100°C, or above 1200°C, maintain or provide a Li vapor pressure of 1 x 10 to 1 x 10⁻³ Pa of Li, LiO, or Li₂O. Optionally the composite setters, when heated above 1000°C, above 1100°C, or above 1200°C, maintain or provide a Li vapor pressure of 1 x 10 to 1 x 10⁻³ Pa of Li. Optionally the composite setters, when heated above 1000°C, above 1100°C, or above 1200°C, maintain or provide a Li vapor pressure of 1 x 10 to 1 x 10⁻³ Pa of Li₂O. Optionally this sufficient Li vapor pressure is a partial pressure of 1 x 10 to 1 x 10⁻³ Pa of Li, LiO, or Li₂O in a mixture with the remainder being Argon. Optionally this sufficient Li vapor pressure is a partial pressure of 1 x 10 to 1 x 10⁻³ Pa of Li, LiO, or Li₂O in a mixture with the remainder being Argon:H₂. Optionally this sufficient Li vapor pressure is a partial pressure of 1 x 10 to 1 x 10⁻³ Pa of Li, LiO, or Li₂O in a mixture with the remainder being Argon:H₂:H₂O. Optionally this sufficient Li vapor pressure is a partial pressure of 1 x 10 to 1 x 10⁻³ Pa of Li, LiO, or Li₂O in a mixture with the remainder being H₂. Optionally this sufficient Li vapor pressure is a partial pressure of 1 x 10 to 1 x 10⁻³ Pa of Li, LiO, or Li₂O in a mixture with the remainder being N₂:H₂. Optionally this sufficient Li vapor pressure is a partial pressure of 1 x 10 to 1 x 10⁻³ Pa of Li, LiO, or Li₂O in a mixture with the remainder being N₂.

In some examples, the composite setters, described herein have a surface roughness between about 0.1 µm and 30 µm. In some examples, the composite setters, described herein have a mass areal density of about 0.2 g/cm² to about 4 g/cm². In some examples, the composite setters, described herein have a density of about 2.2 g/cm² to about 3 g/cm³. In some examples, the composite setters, described herein have a surface flatness of about 0.1 µm to about 50 µm. In some examples, the composite setters, described herein have a porosity of about 10 to 50 %.

Described herein but not recited by the wording of the claims are methods of using setter plates. Some of these methods of using a Li-stuffed garnet setter plate include fabricating a Li-stuffed garnet solid electrolyte for a rechargeable battery include placing unsintered Li-stuffed garnet precursor materials between two Li-stuffed garnet setter plates; and sintering the unsintered film between the two Li-stuffed garnet setter plates. Optionally the unsintered Li-stuffed garnet precursor materials are unsintered films of garnet precursors, binders, dispersants, solvent, polymers, and combinations thereof, also known herein as green films which may be tape-cast or otherwise provided. Some of these methods of using a Li-stuffed garnet setter plate include fabricating a Li-stuffed garnet solid electrolyte for a rechargeable battery, placing and unsintered film of Li-stuffed garnet precursor materials on top of a Li-stuffed garnet setter plate, and sintering the unsintered film on top of the Li-stuffed garnet setter plate.

### BRIEF DESCRIPTION OF THE DRAWINGS

FIG. 1A illustrates setter plates and a method of using the setter plates in the preparation of battery materials, in an embodiment.
FIG. 1B illustrates a plan view and a cross-sectional view of a Li-stuffed garnet setter plate of the present disclosure taken through line A-A' in FIG. 1B, in an embodiment.
FIG. 2 illustrates a method of fabrication of Li-stuffed garnet setter plates.
FIG. 3A is a cross-sectional scanning electron micrograph (SEM) of a Li-stuffed garnet setter plate of the present disclosure fabricated according to the method illustrated in FIG. 2, in an embodiment.
FIG. 3B is a cross-sectional SEM of a Li-stuffed garnet setter plate of the present disclosure that was thermally cycled (i.e., seasoned) to increase its grain size and reduce its tendency to adhere to sintering green films, in an embodiment.
FIG. 4 illustrates four surface roughness measurements from a Li-stuffed garnet setter plate fabricated according to the method shown in FIG. 2, in an embodiment.

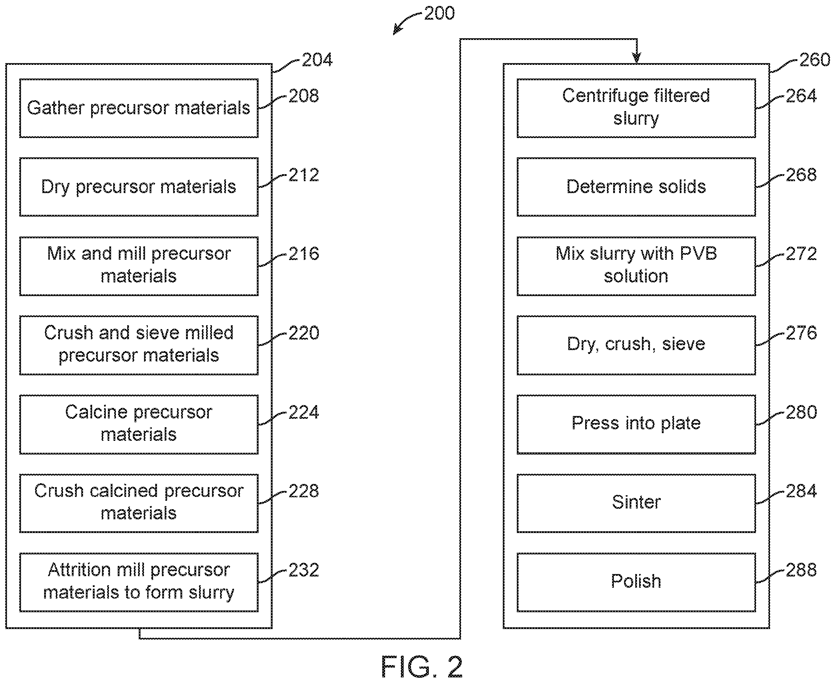

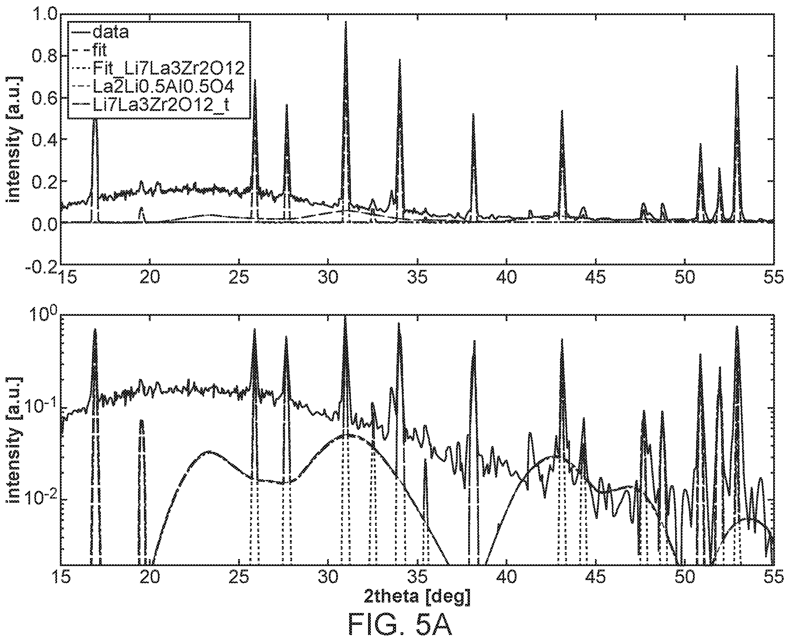

FIGS. 5A-5D illustrate X-ray diffraction (XRD) spectra for sintered Li-stuffed garnet electrolytes which were sintered with either polished small grain setter plates, unpolished small grain setter plates, polished large grain setter plates, or unpolished large grain setter plates, in certain embodiments. As noted in the method illustrated in FIG. 2, setter plates are initially polished following their preparation. Unpolished herein refers to a setter that has been thermally cycled (e.g., heated, i.e., seasoned) but not subsequently polished after the thermal cycle. Polished herein refers to a setter that has been thermally cycled and subsequently polished.
FIG. 6 illustrates a method of using Li-stuffed garnet setter to sinter a Li-stuffed garnet solid electrolyte.
FIG. 7 illustrates an Arrhenius plot (log(σ) v. 1000/T in Kelvin) of electrical impedance spectroscopy (EIS) results for solid state Li-stuffed electrolytes films fabricated according to the method illustrated in FIG. 6 and sintered between two Li-stuffed garnet containing setter plates and in which lithium metal was deposited onto the sintered electrolyte and then tested for ionic conductivity at 20°C, 50°C, 60°C, and 80°C in a symmetric Li|Garnet|Li cell.
FIG. 8 shows DC Testing results for a Li-stuffed garnet electrolyte fabricated according to the method illustrated in FIG. 6 and sintered between two Li-stuffed garnet containing setter plates of the present disclosure and in which the electrolytes were tested in a symmetric Li|Garnet|Li cell.
FIG. 9 shows an example of an EIS (AC Impedance) testing at 60°C for a Li-stuffed garnet electrolyte prepared using Li-stuffed setter plates of the present disclosure and in which the electrolytes were tested in a symmetric Li|Garnet|Li cell.
FIG. 10 shows XRD spectra for three Lithium-stuffed garnet films fabricated according to the method illustrated in FIG. 6 and sintered between either two ZrO₂ setter plates (top, A), two Al₂O₃ setter plates (middle, B), or two lithium-stuffed garnet setter plates (bottom, C).
FIG. 11 shows a method of making a composite setter.
FIG. 12 shows composite setters **(1204)** with sintered lithium-stuffed garnet solid electrolytes **(1208)** thereupon.
FIG. 13 is a cross-sectional scanning electron micrograph (SEM) of a Li-stuffed garnet setter plate of the present disclosure fabricated according to the method illustrated in FIG. 6, in an embodiment, and sintered with a composite setter.
FIG. 14 is a cross-sectional scanning electron micrograph (SEM) of a composite setter **(1400)** which includes a lithium-stuffed garnet material **(1404)** and a LiAlO₂ **(1408)** material.
FIG. 15 illustrates composite setter plates and a method of using the composite setter plates in the preparation of a solid electrolyte film, in an embodiment.
FIG. 16 illustrates a composite setter which includes one material **(1604)** and a second material (**1608**).
FIG. 17 illustrates composite setter plates and a method of using the composite setter plates in the preparation of a solid electrolyte film, in an embodiment.
FIG. 18 illustrates composite setter plates and a method of using the composite setter plates in the preparation of a solid electrolyte film, in an embodiment.
FIG. 19 illustrates composite setter plates and a method of using the composite setter plates in the preparation of a solid electrolyte film, in an embodiment.
FIG. 20 shows photographs or transparent sintered lithium-stuffed garnet (Li₇La₃Zr₂O₁₂Al₂O₃) electrolyte thin films, fabricated according to the method illustrated in FIG. 6, in an embodiment, and sintered with a composite setter.
FIG. 21 shows a Nyquist plots at -30°C (A) and at 0°C (B) for a thin film fabricated according to the method illustrated in FIG. 6, in an embodiment, and sintered with a composite setter.
FIG. 22 shows a plot of radial shrinkage (%) for lithium-stuffed garnet films sintered between lithium-stuffed garnet setter plates as a function of the mass per surface area of the top setter (g/cm²).

### DETAILED DESCRIPTION

### DEFINITIONS

U.S. Patent Application Publication No. U.S. 2015/0099190, which published April 9, 2015 and was filed October 7, 2014 as 14/509,029. This application describes Li-stuffed garnet solid-state electrolytes used in solid-state lithium rechargeable batteries as defined in the claims. Li-stuffed garnets described herein generally having a composition according to Li_{A}La_{B}M'_{C}M"_{D}Z_{RE}O_{F}, Li_{A}La_{B}M'_{C}M"_{D}Ta_{E}O_{F}, or Li_{A}La_{B}M'_{C}M"_{D}Nb_{E}O_{F}, wherein 4<A<8.5, 1.5<B<4, 0≤C≤2, 0≤D≤2; 0≤E<2, 10<F<13, and M' and M" are each, independently in each instance selected from Al, Mo, W, Nb, Sb, Ca, Ba, Sr, Ce, Hf, Rb, or Ta, or LiₐLa_{b}Zr_{c}Al_{d}Me"ₑO_{f}, wherein 5<a<8.5; 2<b<4; 0<c≤2.5; 0≤d<2; 0≤e<2, and 10<f<13 and Me" is a metal selected from Nb, Ta, V, W, Mo, or Sb and as otherwise described in U.S. Patent Application Publication No. U.S. 2015/0099190. As used herein, lithium-stuffed garnets, and garnets, generally, include, but are not limited to, Li_{7.0}La₃(Zrt₁ + Nbt₂ + Tat₃)O₁₂ + 0.35Al₂O₃; wherein (subscripts t1+t2+t3 = subscript 2) so that the La:(Zr/Nb/Ta) ratio is 3:2. Also, garnets used herein includes, but are not limited to, LiₓLa₃Zr₂O₁₂ + yAl₂O₃, wherein x ranges from 5.5 to 9; and y ranges from 0 to 1. In these examples, x and y are selected so that the garnet is charge neutral. In some examples x is 7 and y is 1.0. In some examples, x is 5 and y is 1.0. In some examples, x is 6 and y is 1.0. In some examples, x is 8 and y is 1.0. In some examples, x is 9 and y is 1.0. In some examples x is 7 and y is 0.35. In some examples, x is 5 and y is 0.35. In some examples, x is 6 and y is 0.35. In some examples, x is 8 and y is 0.35. In some examples, x is 9 and y is 0.35. In some examples x is 7 and y is 0.7. In some examples, x is 5 and y is 0.7. In some examples, x is 6 and y is 0.7. In some examples, x is 8 and y is 0.7. In some examples, x is 9 and y is 0.7. In some examples x is 7 and y is 0.75. In some examples, x is 5 and y is 0.75. In some examples, x is 6 and y is 0.75. In some examples, x is 8 and y is 0.75. In some examples, x is 9 and y is 0.75. In some examples x is 7 and y is 0.8. In some examples, x is 5 and y is 0.8. In some examples, x is 6 and y is 0.8. In some examples, x is 8 and y is 0.8. In some examples, x is 9 and y is 0.8. In some examples x is 7 and y is 0.5. In some examples, x is 5 and y is 0.5. In some examples, x is 6 and y is 0.5. In some examples, x is 8 and y is 0.5. In some examples, x is 9 and y is 0.5. In some examples x is 7 and y is 0.4. In some examples, x is 5 and y is 0.4. In some examples, x is 6 and y is 0.4. In some examples, x is 8 and y is 0.4. In some examples, x is 9 and y is 0.4. In some examples x is 7 and y is 0.3. In some examples, x is 5 and y is 0.3. In some examples, x is 6 and y is 0.3. In some examples, x is 8 and y is 0.3. In some examples, x is 9 and y is 0.3. In some examples x is 7 and y is 0.22. In some examples, x is 5 and y is 0.22. In some examples, x is 6 and y is 0.22. In some examples, x is 8 and y is 0.22. In some examples, x is 9 and y is 0.22. Also, garnets as used herein include, but are not limited to, LiₓLa₃Zr₂O₁₂ + yAl₂O₃. In one embodiment, the Li-stuffed garnet used to fabricate setter plates of the present disclosure has a composition of Li₇La₃Zr₂O₁₂. In another embodiment, the Li-stuffed garnet used to fabricate setter plates of the present disclosure has a composition of Li₇La₃Zr₂O₁₂·Al₂O₃. In yet another embodiment, the Li-stuffed garnet used to fabricate setter plates of the present disclosure has a composition of Li₇La₃Zr₂O₁₂·0.22Al₂O₃. In yet another embodiment, the Li-stuffed garnet used to fabricate setter plates of the present disclosure has a composition of Li₇La₃Zr₂O₁₂·0.35Al₂O₃. In certain other embodiments, the Li-stuffed garnet used to fabricate setter plates of the present disclosure has a composition of Li₇La₃Zr₂O₁₂·0.5Al₂O₃. In another embodiment, the Li-stuffed garnet used to fabricate setter plates of the present disclosure has a composition of Li₇La₃Zr₂O₁₂·0.75Al₂O₃.

As used herein, "inert refractory material," means a heat resistant material which does not substantially deform when heated to sintering temperatures (*e.g.,* 450 °C -1300 °C) and which does react with a sintering green film. Reacting with a sintering green film includes for example, but is not limited to, interdiffusion of chemical species between the green film and the refractory material, loss of crystal phase in the sintering film, sticking of the film to the setter, bonding of the film to the setter, or adhering of the green film to the inert refractory material in a manner which results in cracking of the film during the sintering process.

As used herein, garnet does not include YAG-garnets (*i.e.,* yttrium aluminum garnets, or, *e.g.,* Y₃Al₅O₁₂). As used herein, garnet does not include silicate-based garnets such as pyrope, almandine, spessartine, grossular, hessonite, or cinnamon-stone, tsavorite, uvarovite and andradite and the solid solutions pyrope-almandine-spessarite and uvarovite-grossular-andradite. Garnets herein do not include nesosilicates having the general formula X₃Y₂(SiO₄)₃ wherein X is Ca, Mg, Fe, and, or, Mn; and Y is Al, Fe, and, or, Cr.

As used herein, the phrases "garnet precursor chemicals," "chemical precursor to a garnet-type electrolyte," "precursors to garnet" and "garnet precursor materials" refer to chemicals which react to form a lithium stuffed garnet material described herein. These chemical precursors include, but are not limited to lithium hydroxide (e.g., LiOH), lithium oxide (*e.g.,* Li₂O), lithium carbonate (*e.g.,* LiCO₃), zirconium oxide (*e.g.,* ZrO₂), lanthanum oxide (*e.g.,* La₂O₃), lanthanum hydroxide (*e.g.,* La(OH)₃), aluminum oxide (*e.g.,* Al₂O₃), aluminum hydroxide (e.g., Al(OH)₃), aluminum (*e.g.,* Al), aluminum nitrate (*e.g.,* Al(NO₃)₃), aluminum nitrate nonahydrate, niobium oxide (*e.g.,* Nb₂O₅), and tantalum oxide (*e.g.,* Ta₂O₅). Other precursors to garnet materials, known in the relevant field to which the instant disclosure relates, may be suitable for use with the methods set forth herein.

As used herein the phrase "garnet-type electrolyte," refers to an electrolyte that includes a lithium stuffed garnet material described herein as the Li⁺ ion conductor. The advantages of Li-stuffed garnet solid-state electrolytes are many, including as a substitution for liquid, flammable electrolytes commonly used in lithium rechargeable batteries.

As used herein, the phrase "d₅₀ diameter" refers to the median size, in a distribution of sizes, measured by microscopy techniques or other particle size analysis techniques, such as, but not limited to, scanning electron microscopy or dynamic light scattering. D₅₀ describes a characteristic dimension of particles at which 50% of the particles are smaller than the recited size.

As used herein, the phrase "grain size" refers the characteristic dimension, or maximum dimension (*e.g.,* diameter of a spherically-shaped grain), defining a region that has a homogeneous composition, crystalline structure, and crystal orientation. Grains can be observed by high resolution TEM or electron back-scatter diffraction (EBSD).

The term "unpolished" in the context of a setter plate refers to a setter plate that has been thermally cycled (*e.g.,* heated or seasoned) but not subsequently polished.

The term "polished" in the context of a setter plate refers to a setter plate that has been thermally cycled (*e.g.,* heated or seasoned) and subsequently polished.

As used herein, "thermally cycling" in the context of a setter plate refers to heating a setter plate without sintering a green film thereupon.

As used herein, the phrase "green film" refers to an unsintered film including at least one member selected from garnet materials, precursors to garnet materials, binder, solvent, carbon, dispersant, or combinations thereof.

As used herein, "flatness" of a surface refers to the greatest normal distance between the lowest point on a surface and a plane containing the three highest points on the surface, or alternately, the greatest normal distance between the highest point on a surface and a plane containing the three lowest points on the surface. It may be measured with an AFM, a high precision optical microscope, or laser interferometry height mapping of a surface.

As used herein, "porosity" of a body is the fractional volume that is not occupied by material. It may be measured by mercury porosimetry or by cross-sectioning the body and optically determining the 2D fractional area of porosity of the cross-sectioned surface.

The preparation of the Li-stuffed garnet solid state electrolytes, at a high level, involves preparing a mixture of precursor materials, calcined garnet materials, or combinations thereof and binders. In some examples, the preparation further includes pressing, providing or forming the mixture into a desired form factor (such as a plate, disk, film, or pellet) or cast (*e.g.*, tape cast, slot-die, screen print, spray deposition, slip-cast, gel-cast, or doctor-bladed) as a film. In some examples, the preparation further includes sintering the mixture or film under the pressure applied to the sintering electrolyte on account of the weight of the setter placed in contact with the sintering mixture or film. Certain preparation methods for solid state electrolytes are also described in U.S. Patent Application Publication No. U.S. 2015/0099190, which published April 9, 2015 and was filed October 7, 2014.

### OVERVIEW

Ion (*e.g.,* Li⁺) mobility is typically lower in solid state electrolytes compared to ion mobility in conventionally used, flammable, liquid electrolytes. To compensate for this lower ion mobility, the solid electrolyte dimensions, such as the thickness of a film, are reduced (from approximately 200 microns or 100 microns to approximately 50 microns or 10 microns) so that a significantly reduced ion migration distance through the solid state electrolyte (compared to the conventional liquid electrolyte) compensates for the lower mobility. The result is a solid state electrolyte that provides energy delivery rates (*i.e.,* power) comparable to, or superior to, energy delivery rates of secondary batteries using flammable, liquid electrolytes.

However, challenges remain in the fabrication of a solid state electrolyte thinner than approximately 100 microns and with sufficient mechanical integrity to operate reliably within a solid-state battery. For example, cracks, voids, and other inhomogeneities can act as nucleation sites for lithium ions. As the lithium ions nucleate at these sites, metallic lithium can continue to accrete at these sites during discharge of the battery and can lead to shorting of the battery once lithium dendrites electrically connect the anode to the cathode or vice versa. In other situations, inhomogeneities, cracks, and/or surface roughness can increase resistance at interfaces between the solid state electrolyte and the corresponding positive and negative electrodes. This has the effect of reducing battery efficiency and power. Furthermore, as mentioned above, maintaining stoichiometry of a solid state electrolyte is an important factor in proper functioning of the battery in terms power and energy delivery efficiency.

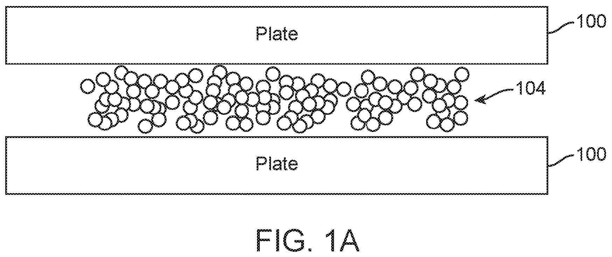

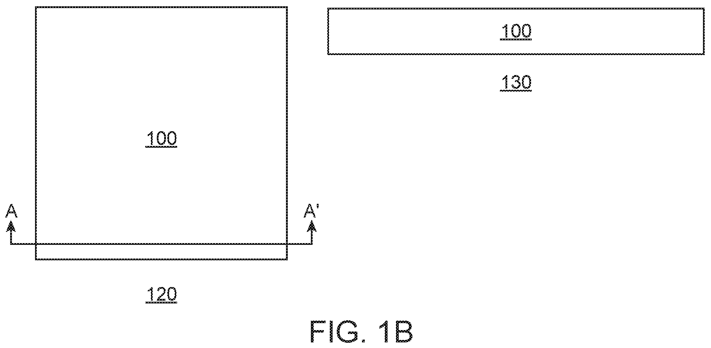

Embodiments of the present disclosure use Li-stuffed garnet setter plates or setter plates which include a Li-stuffed garnet oxide to apply pressure to similarly, substantially similarly, or identically composed Li-stuffed solid electrolytes films, wherein the pressure applied is related to the weight of the setter plate. Additional external pressures are typically not applied to the setter plate; rather the setter plate is designed so that the weight of the plate is sufficient to press onto a sintering film and form a smooth surface but not to crack the sintering film as it is sintering or after it is sintered. As is shown in FIG. 1, Li-stuffed garnet setter plates 100 are used to apply pressure to a dried slurry (referred to herein and in U.S. Patent Application Publication No. 2015-0200420 as a "green film") of precursor materials and binders 104 during sintering. In some examples, the dried slurry is referred to as a green tape. Solid state electrolytes have been fabricated herein using "setter plates" that apply pressure to solid electrolyte precursor materials prior to and during sintering. These plates are normally flat and do not generally react with the sintered material. Conventional inert setter plates can be metallic (e.g., platinum) or ceramic (e.g., zirconia (ZrO₂) or alumina (Al₂O₃)) and, optionally, can be porous to provide for the diffusion of gases and vapors therethrough during sintering. However, several problems are associated with conventional setter plates, such as adherence of the conventional setter plates to the sintering thin film or destruction of the Li-stuffed garnet chemical composition in the sintering thin film.

In some examples described herein, other setter plates may be used, for example in combination with the lithium stuffed garnet setter plates described herein, so long as that other setter plate has a high melting point, a high lithium activity, and stability in a reducing environment. Some examples of these other materials include a member selected from Li₂ZrO₃, xLi₂O-(1-x)SiO₂ (where x=0.01-0.99), aLi₂O-bB₂O₃-cSiO₂ (where a+b+c=1), LiLaO₂, LiAlO₂, Li₂O, Li₃PO₄, a Li-stuffed garnet, or combinations thereof. In some embodiments, the other setter plates comprise Li₂ZrO₃. In some embodiments, the other setter plates comprise Li₂SiO₃. In some embodiments, the other setter plates comprise LiLaO₂. In some embodiments, the other setter plates comprise LiAlO₂. In some embodiments, the other setter plates comprise Li₂O. In some embodiments, the other setter plates comprise Li₃PO₄. In some embodiments, the other setter plates comprise a Li-stuffed garnet. In some embodiments, the other setter plates comprise at least two, three, four or more of Li₂ZrO₃, Li₂SiO₃, LiLaO₂, LiAlO₂, Li₂O, Li₃PO₄, and a Li-stuffed garnet. Additionally, these other setter plates should not induce a chemical potential in the sintering film which results in Li diffusion out of the sintering film, for example, into the setter plate.

While some setter plates could be fabricated from other unrelated garnet-type materials (*i.e.,* having a composition according to X₃Y₂(SiO₄)₃ where X is a divalent cation (*e.g.,* Ca²⁺, Mg²⁺, Fe²⁺, Mn²⁺) and Y is a trivalent cation (e.g., Al³⁺, Fe³⁺, Cr³⁺)), these other unrelated garnet-type setter plate compositions, even though structurally garnet, are not suitable for fabrication of lithium-stuffed garnet solid electrolytes for lithium secondary batteries. Conventional and/or commercially available setter plates, when in contact with a sintering Li electrolyte, result in a chemical potential that drives Li loss (*e.g.,* Li diffusion out of the electrolyte) during the sintering process and destruction of the chemical composition of the Li electrolyte (*e.g.,* destruction of, or change in, the Li-stuffed garnet composition). Even assuming that some of these other setter plates were able to be used to sinter Li-stuffed garnet solid electrolytes having surfaces sufficiently smooth and with sufficient mechanical integrity (*i.e.,* few or no cracks, pores, or inhomogeneities that act as sites for mechanical failure of metallic lithium nucleation), deficiencies remain. For example, conventional setter plates, whether ZrO₂, Al₂O₃, or platinum alloy with lithium, permit the diffusion of lithium from the precursor materials into the setter plates. Thus, at sintering temperatures, the Li-stuffed solid electrolyte changes composition as lithium diffuses into the setter plates. This, in turn, reduces the performance of the solid electrolyte that is produced by this sintering process.

In some embodiments, the other setter plates comprise Li₂Si₂O₅. In some embodiments, the other setter plates comprise Li₂ZrO₃. In some embodiments, the other setter plates comprise Li₂SiO₃. In some embodiments, the other setter plates comprise Li₄SiO₄. In some embodiments, the other setter plates comprise Li₈SiO₆. In some embodiments, the other setter plates comprise Li₃BO₃. In some embodiments, the other setter plates comprise LiBO₂. In some embodiments, the other setter plates comprise Li₂B₄O₇. In some embodiments, the other setter plates comprise Li₃B₇O₁₂. In some embodiments, the other setter plates comprise LiLaO₂. In some embodiments, the other setter plates comprise LiAlO₂. In some embodiments, the other setter plates comprise Li₂O. In some embodiments, the other setter plates comprise Li₃PO₄. In some embodiments, the other setter plates comprise a Li-stuffed garnet, In some embodiments, the other setter plates comprise at least two, three, four or more of a member selected from Li₂ZrO₃, Li₂Si₂O₅, Li₂SiO₃, Li₄SiO₄, Li₈SiO₆, Li₃BO₃, LiBO₂, Li₂B₄O₇, Li₃B₇O₁₂, LiLaO₂, LiAlO₂, Li₂O, Li₃PO₄, Li-stuffed garnet, or combinations thereof.

In contrast, embodiments of the present disclosure fabricate setter plates out of garnet materials having the same or substantially similar composition as the Li-stuffed garnet solid electrolyte. In addition to providing a surface by which to apply pressure to the solid state electrode precursor mixture, setter plates of the present disclosure do not affect the composition of the Li-stuffed garnet solid electrolyte itself. This has the benefit of maintaining compositional control of the solid electrolyte itself during sintering when, upon heating, lithium is prone to diffusing out of the solid electrolyte. Furthermore, surprisingly, the Li-stuffed solid electrolyte produced by using setter plates of a same, or substantially similar, composition has superior mechanical integrity (*e.g.,* lower areal crack density, less variation in surface roughness) compared to Li-stuffed solid electrolyte sintered between conventional setter plates having different composition from the solid electrolyte.

### SETTERS

The invention as defined by the claims provides a setter plate suitable for use for fabricating solid electrolytes of a rechargeable battery, wherein the setter plate includes a Li-stuffed garnet compound characterized by the formula LiₓLa_{y}Zr_{z}Oₜ·qAl₂O₃, wherein 4<x<10, 1<y<4, 1<z<3, 6<t<14, and 0≤q≤1. In some examples, the setter plate has a surface defined by a first lateral dimension from 2 cm to 30 cm and a second lateral dimension from 2 cm to 30 cm; and a thickness from 0.1 mm to 100 mm.

In some examples, the surface is defined by a first lateral dimension from 5 cm to 20 cm and a second lateral dimension from 5 cm to 20 cm.

In some examples, the thickness is from 1 mm to 100 mm. In other examples, the thickness is from 0.1 mm to 10 mm. In still other examples, the thickness is from 0.5 mm to 5 mm. In some other examples, the thickness is from 1 mm to 1.5 mm.

In some examples, the Li-stuffed garnet compound comprises grains from 1 microns in diameter to 400 microns in diameter. In some examples, the Li-stuffed garnet compound comprises grains having a grain size from 2 microns to 10 microns. In other examples, the Li-stuffed garnet compound comprises grains having a grain size from 100 microns to 400 microns.

In some examples of the setter plates set forth herein, the surface of the setter plate has a surface roughness from 1.0 µm Ra to 4 µm Ra, wherein Ra is an arithmetic average of absolute values of sampled surface roughness amplitudes. In some examples, the surface has a surface roughness from 0.5 µm Rt to 30 µm Rt, wherein Rt is the maximum peak height of sampled surface roughness amplitudes. In some examples, the surface roughness is from 1.6 µm Ra to 2.2 µm Ra. In other examples, the surface roughness is from 3.2 µm Ra to 3.7 µm Ra. In still other examples, the surface roughness is from 1 µm Rt to 28 µm Rt. In some other examples, the surface roughness is from 10 µm Rt to 30 µm Rt. In certain examples, the surface roughness is from 15 µm Rt to 30 µm Rt. In some examples, the crystallite size in the grains is about 200 nm to 1 µm. In some examples, the crystallite size in the grains is about 100 nm to 5 µm.

In some examples, q is 0.35 or 1. In some examples, the formula characterizing the setter plate is Li7La₃Zr₂O₁₂·qAl₂O₃, wherein q is 0, 0.3, 0.35, 0.5, 0.75, or 1.0.

In some examples, set forth herein is a setter plate suitable for use for fabricating solid electrolytes of a rechargeable battery, wherein the setter plate includes an oxide material with lithium concentration greater than 0.02 mol/cm³ and a melting point above 1100 °C. In some examples, the surface of the setter plate is defined by a first lateral dimension from 3 cm to 30 cm and a second lateral dimension from 3 cm to 30 cm; and a thickness from 0.1 mm to 100 mm.

In some examples, the setter plate includes an oxide material selected from LiLaO₂.

In some examples, the setter plate includes an oxide material selected from Al₂O₃.

In some examples, the setter plate includes an oxide material selected from ZrO₂,

In some examples, the setter plate includes an oxide material selected from La₂O₃.

In some examples, the setter plate includes an oxide material selected from LiAlO₂.

In some examples, the setter plate includes an oxide material selected from Li₂O.

In some examples, the setter plate includes an oxide material selected from Li₃PO₄.

In some examples, the setter plate includes an oxide material selected from LiLaO₂, LiAlO₂, Li₂O, Li₃PO₄, or a Li-stuffed garnet compound characterized by the formula LiₓLa_{y}-Zr_{z}Ot·qAl₂O₃, wherein 4<x<10, 1<y<4, 1<z<3, 6<t<14, 0≤q≤1, or combinations thereof.

The invention as defined by the claims provides a setter plate for fabricating solid electrolytes of a rechargeable battery, wherein the setter plate includes at least one inert refractory material and at least one lithium source material. The inert refractory material is at least one member selected from Al₂O₃, LiAlO₂, LaAlO₃, ZrO₂, La₂O₃, Li₂ZrO₂, Li₂TiO₃ or the derivatives thereof. In some examples, the inert refractory material is Al₂O₃. In some examples, the inert refractory material is LiAlO₂. In some examples, the inert refractory material is LaAlO₃. In some examples, the inert refractory material is Al₂O₃. In some examples, the inert refractory material is ZrO₂. In some examples, the inert refractory material is La₂O₃. In some examples, the inert refractory material is Li₂ZrO₂. In some examples, the inert refractory material is Li₂TiO₃. Described herein but not recited by the wording of the claims the lithium source material is selected from a lithium-stuffed garnet oxide characterized by the formula LiₓLa_{y}Zr_{z}Oₜ·qAl₂O₃, wherein 4<x<10, 1<y<4, 1<z<3, 6<t<14, and 0≤q≤1, Li₂O, Li, LisAlO₄, LiAl₅O₈, LiAlO₂, Li₂SiO₃, Li₄SiO₄, Li₂SnO₃, LiNbO₃, Li₄TiO₄, Li₂TiO₃, Li₂ZrO₃, Li₈PbO₆, the derivatives thereof, or combinations thereof. Described herein but not recited by the wording of the claims the inert refractory material is a lithium-stuffed garnet oxide characterized by the formula LiₓLa_{y}Zr_{z}Oₜ·qAl₂O₃, wherein 4<x<10, 1<y<4, 1<z<3, 6<t<14, and 0≤q≤1. Described herein but not recited by the wording of the claims the inert refractory material is a Li₂O. Described herein but not recited by the wording of the claims the inert refractory material is a Li. Described herein but not recited by the wording of the claims the inert refractory material is a Li₅AlO₄. Described herein but not recited by the wording of the claims the inert refractory material is a LiAl₅O₈. In some embodiments, the inert refractory material is a LiAlO₂. Described herein but not recited by the wording of the claims the inert refractory material is a Li₂SiO₃. Described herein but not recited by the wording of the claims the inert refractory material is a Li₄SiO₄. Described herein but not recited by the wording of the claims the inert refractory material is a Li₂SnO₃. Described herein but not recited by the wording of the claims the inert refractory material is a LiNbO₃. Described herein but not recited by the wording of the claims the inert refractory material is a Li₄TiO₄. In some embodiments, the inert refractory material is a Li₂TiO₃. Described herein but not recited by the wording of the claims the inert refractory material is a Li₂ZrO₃. Described herein but not recited by the wording of the claims the inert refractory material is a Li₈PbO₆.

In some examples, the composite setters herein have a surface defined by a first lateral dimension from 2 cm to 30 cm and a second lateral dimension from 2 cm to 30 cm; and a thickness from 0.1 mm to 100 mm.

In the invention as defined by the claims the lithium source material is a Li-stuffed garnet compound characterized by the formula LiₓLa_{y}Zr_{z}Oₜ·qAl₂O₃, wherein 4<x<10, 1<y<4, 1<z<3, 6<t<14, 0≤q≤1.

In the invention as defined by the claims the setter has a mass areal density of about 0.2 g/cm² to about 4 g/cm². In some examples herein, the setter porosity is from 10-50%. In some examples herein, the setter density is from about 2.2 to 3 g/cm³. In some examples herein, the setter has a surface roughness from about 0.1 µm to about 30µm. In some examples herein, the setter has a surface flatness from about 0.1µm to about 50 µm.

In some examples, set forth herein is a device comprising a lithium-stuffed garnet electrolyte prepared using a setter set forth herein.

In some examples, set forth herein is a device comprising a lithium-stuffed garnet electrolyte prepared using a method set forth herein. Any methods described herein which describe a lithium-stuffed garnet setter can optionally include a composite setter in place of the lithium-stuffed garnet setter.

In some examples, set forth herein is a system including at least two setter plates and a green film positioned in between the at least two setter plates, wherein one of the at least two setter plates is a setter plate described herein (*e.g.,* a composite setter or a lithium-stuffed garnet setter).

In some examples, set forth herein is a stack including at least two setter plates and a green film positioned in between the at least two setter plates, wherein one of the at least two setter plates is a setter plate described herein (*e.g.,* a composite setter or a lithium-stuffed garnet setter).

In some examples, set forth herein a column including repeated units of a system described herein.

In some examples, set forth herein an array including repeated units of the system of described herein.

In some examples, set forth herein is a composite setter plate, at least two inert refractory setter plate, and a green film, wherein the green film is between the two inert refractory setters.

In some examples, set forth herein is at least one composite setter plate, at least two inert refractory setter plate, and a green film, wherein the green film is between the two inert refractory setters.

In some examples, set forth herein is system including at least two composite setter plates, at least two inert refractory setter plate, and a green film, wherein the green film is between the two inert refractory setters.

In some examples, set forth herein is a stack including at least two composite setter plates, at least two inert refractory setter plate, and a green film, wherein the green film is between the two inert refractory setters.

In some examples, set forth herein is an enclosed environment including a Li source powder, at least two inert refractory setters, and a green film, wherein the green film is between the two inert refractory setters.

In some examples, the environment is selected from an oven or a furnace.

In some examples, set forth herein is an enclosed environment including a Li-stuffed garnet setter, at least two inert refractory setters, and a green film, wherein the green film is between the two inert refractory setters. In some examples, the environment is selected from an oven or a furnace.

In some examples, set forth herein is a system including at least two composite setter plates and a green film, wherein the green film is between the two composite setter plates.

In some examples, set forth herein is a stack including at least two composite setter plates and a green film, wherein the green film is between the two composite setter plates.

In some examples, set forth herein is a system including at least two lithium-stuffed garnet setter plates and a green film, wherein the green film is between the two composite setter plates.

In some examples, set forth herein is a stack including at least two lithium-stuffed garnet setter plates and a green film, wherein the green film is between the two composite setter plates.

In some examples, set forth herein is an system or stack with a setter having a surface roughness from 1.0 µm Ra to 4 µm Ra, wherein Ra is an arithmetic average of absolute values of sampled surface roughness amplitudes.

In some examples herein, the setter has a surface roughness from 0.5 µm Rt to 30 µm Rt, wherein Rt is the maximum peak height of sampled surface roughness amplitudes.

In some examples herein, the setter plate includes an oxide material with lithium concentration greater than 0.02 mol/cm³ and a melting point above 1100 °C.

In some examples, the setter has a surface defined by a first lateral dimension from 3 cm to 30 cm and a second lateral dimension from 3 cm to 30 cm; and a thickness from 0.1 mm to 100 mm.

In some examples herein, the composite setter includes LiLaO₂.

In some examples herein, the composite setter includes Al₂O₃.

In some examples herein, the composite setter includes ZrO₂,

In some examples herein, the composite setter includes La₂O₃

In some examples herein, the composite setter includes LiAlO₂.

In some examples herein, the composite setter includes Li₂O.

In some examples herein, the composite setter includes Li₃PO₄.

In some examples herein, the composite setter includes LiLaO₂, LiAlO₂, Li₂O, Li₃PO₄, a Li-stuffed garnet compound characterized by the formula LiₓLa_{y}Zr_{z}Oₜ·qAl₂O₃, wherein 4<x<10, 1<y<4, 1<z<3, 6<t<14, 0≤q≤1, or combinations thereof.

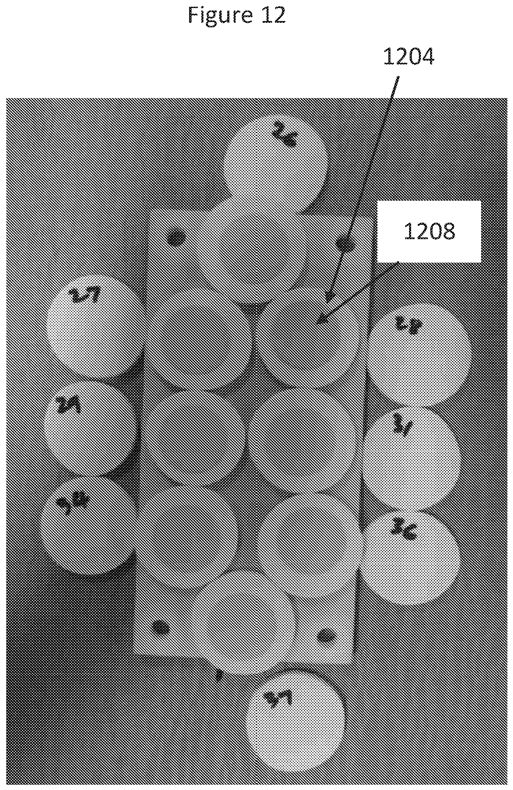

As shown in FIG. 12, in some examples, the composite setters, **1204,** are circular or disc-like in shape. A sintered film, **1208,** can be prepared by the methods disclosed herein wherein a green film is positioned between two composite setters, **1204,** and the sintered.

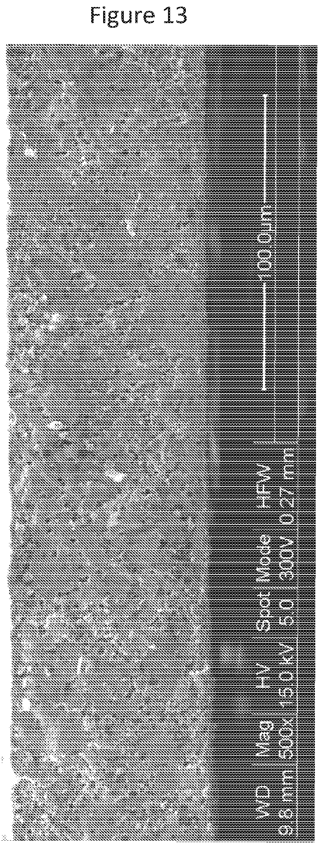

As shown in FIG. 13, the lithium-stuffed garnet sintered films which are made by the methods herein include dense lithium-stuffed garnet that does not include a substantial amount of porosity or defects.

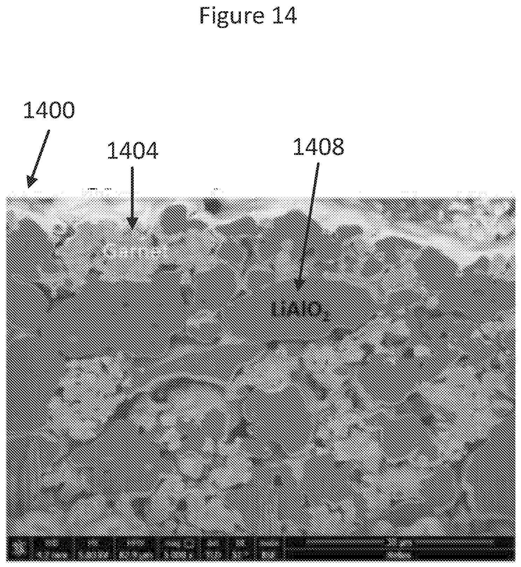

As shown in FIG. 14, in some examples, the composite setter, **1400,** includes an inert refractory material selected from LiAlO₂, **1408,** and lithium source material selected from a lithium-stuffed garnet (e.g., Li₇La₃Zr₂O₁₂·Al₂O₃), **1404**.

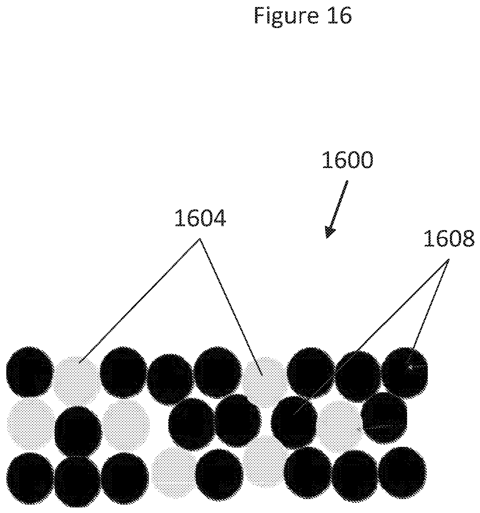

The composite setter in FIG. 14 is illustrated graphically in FIG. 16 as composite setter, **1600**. In this composite setter, the setter includes an inert refractory material, **1604**, and lithium source material, **1608**.

### METHOD OF MAKING SETTERS

FIG. 1B illustrates a plan view and a cross-sectional view of a Li-stuffed garnet setter plate of the present disclosure taken through line A-A' in FIG. 1A. The plan view 120 illustrates that a Li-stuffed garnet setter plate of the present disclosure is up to 10 cm per side in one embodiment, although it will be appreciated that other embodiments can have lateral dimensions greater or smaller than 10 cm. In some embodiments, a lateral dimension is as low as 5 cm and as high as 20 cm. In some other embodiments, a lateral dimension is as low as 1 cm and as high as 96 cm. Also, generally the setter plates of the present disclosure are square or rectangular, but other embodiments include setter plates that are any regular or irregular polygon, or even have circular or ellipsoidal cross-sections. The cross-sectional view 130 illustrates a Li-stuffed garnet setter plate of the present disclosure up to 2 mm thick, in an embodiment. Other embodiments are between approximately 1 mm and 1.5 mm thick. Still other embodiments are as thick as 100 mm. This thickness is a benefit of Li-stuffed garnet setter plates of the present disclosure, which maintain mechanical integrity even in these relatively thin configurations. However, the setter plates cannot be too thick (*e.g.,* areal density greater than 1.7 g/cm²) or the weight of the setter plate may crack or stick to the sintered film that is positioned between the setter plates. It is therefore advantageous to size the setter plates, in some examples, such that the weight of the setter and its size result in an areal density of 1.7 g/cm² or less.

FIG. 2 illustrates a method 200 for fabricating Li-stuffed garnet setter plates. As shown in FIG. 2, the method 200 can, for convenience of explanation only, be depicted in two meta-steps: raw material preparation 204; and setter plate fabrication 260. The method 200 is described below in more detail.

Within raw material preparation 204 meta-step, precursor materials LiOH, Al(NO₃)₃·9 H₂O, ZrO₂, and La₂O₃ are gathered 208 in quantities corresponding to molar amounts of the final Li-stuffed garnet setter plate final composition (Li_{A}La_{B}M'_{C}M''_{D}Zr_{E}O_{F}, Li_{A}La_{B}M'_{C}M"_{D}Ta_{E}O_{F}, or Li_{A}La_{B}M'_{C}M"_{D}Nb_{E}O_{F}, wherein 4<A<8.5, 1.5<B<4, 0≤C≤2, 0≤D≤2; 0≤E<2, 10<F<13, *e*.*g*., Li₇La₃Zr₂O₁₂), as described above and as also described in various experimental examples of U.S. Patent Application Publication No. U.S. 2015/0099190, which published April 9, 2015. Optionally precursor materials are combined in proportions that, when reacted, produce a composition of Li₇Li₃Zr₂O₁₂ or Li₇Li₃Zr₂O₁₂(0.35-1.0)Al₂O₃. The precursor materials are dried 212 at 120°C for at least 45 minutes. The dried precursor materials mixed and are optionally milled 216 in a ball mill between 6 and 8 hours using, in some examples, 0.3mm yttria- stabilized zirconium oxide grinding media beads. The result is a particle size distribution of precursor materials with a d₅₀ of approximately 100 nm. In some examples, the result is a particle size distribution of precursor materials with a d₅₀ of approximately 100 nm to 600 nm. The precursor materials are optionally crushed using a Retzsch mill and sieved 220 using a 40 mesh sieve for 5 minutes. The precursor materials are then placed in an alumina crucible, covered, and calcined 224 at about 900°C (or at a temperature ranging from 400 °C to 1200 °C ) for approximately 6 hours (or for about 2, 4, 6, or 8 hours). The calcined product is then crushed 228 with, for example, a mortar and pestle although other grinding and milling mechanisms may be used. The calcined and crushed precursor materials are then attrition milled 232 by suspending approximately 62.5 weight % solids and 10 weight % dispersant, with a suspension media such as isopropyl alcohol making up the balance of the weight (*i.e.,* approximately 27.5 weight %). In some examples, step 232 includes about 60 g of garnet, about 30 g of solvent, and about 10 g of dispersant. In some examples, the solvent is isopropanol and butanol.

Examples of dispersants, used to facilitate suspension of the calcined and crushed precursor materials in the isopropyl alcohol include, but are not limited to, phosphate esters, RHODOLINE^{™} 4160, RHODOLINE^{™} 4188, Phoschem R6, Phoschem PD, phospholan-131^{™}, esters such as fish oil, BYK^{™} 22124, surfactants, fluorosurfactants, polyvinylpyridine (PVP), polyvinyl butadiene (PVB), TRITON^{™}, phospholan-131^{™}, BYK^{™} 22124, BYK^{™} 22416, Hypermer KD1^{™}, polyalkylene amine such as Hypermer KD2, acrylic polymers such as Hypermer KD6^{™}, Hypermer KD7^{™} and others, such as Dispersbyk-118, BYK^{™} 22146, Hypermer KD7^{™}. While isopropyl alcohol is used in this example, other solvents may also be used including toluene, ethanol, combinations thereof (*i.e.,* toluene:ethanol::4:1) and others. The attrition milling may be performed for approximately eight hours with an inert zirconia grinding media to produce a d₅₀ particle size distribution from approximately 100nm to approximately 1 µm (*e.g.,* from approximately 300 nm to approximately 400 nm).

Meta-step 260 begins with the slurry produced by meta-step 232 as an input. The slurry is optionally centrifuged 264 at 2000 rpm for 1-12 hours. Step 264 is optional and may or may not be used. If, however, the slurry is centrifuged 264, the supernatant is drained and the percentage of solids in the remaining slurry is determined 268. If the slurry is not centrifuged, the solid loading is determined and adjusted appropriately. In some examples the percentage of solids in the slurry is between approximately 40 weight %, 50 weight % 60 weight % or 70 weight % or any weight % that falls between any two of these values. In some examples, the slurry is adjusted or prepared so that the slurry includes, in relative amounts respectively, approximately 60 g of garnet, approximately 100 g of solvent, approximately 4 g of binder (PVB) and approximately 1 g of plasticizer (e.g., dibutyl phthalate, benzyl dutyl phthalate, and the like).

The slurry is then mixed 272 with a 4 weight % solution of polyvinyl butyral binder in toluene in a weight ratio of 1:1. This mixture is then dried, mechanically crushed (for example, using a mortar and pestle), and sieved 276, for example, using an 80 mesh sieve. Resulting from 276 is a slurry having approximately 100 g of garnet, 4 g of binder, and 1 g of plasticizer.

The combined Li-stuffed garnet powder, solvent, binder, and plasticizer are then mixed and milled using techniques described above. As noted in FIG. 2, the approximate composition of combination is in some examples: about 50 wt% powder, 47.5 wt% solvent, 2 wt% binder and 0.5 wt% plasticizer. Binders and solvents are described herein, above and below. The combined components are then mixed and/or optionally milled for approximately 8 hours (*e.g.,* by hand stirring although the components can be combined using appropriate mixer or blender). The mixed components are placed on a hot plate or oven to remove the solvents as per step 276 in FIG. 2. Other methods to remove solvents such as ROTO-VAP^{™} or spray drying could also be used.

The powder produced after drying, crushing, and sieving 276 is pressed 280 into a setter plate format using a mechanical press and corresponding die. For example, forming a setter plate into a format of a square approximately 2.5 cm on a side includes applying 2000 lbs of force to the powder. In other examples, the method includes forming a setter plate into a format of a square approximately 10 cm on a side includes applying 2000 lbs of force to the powder.

The pressed plate is then placed between, or on top of, commercially available (*e.g.,* platinum) setter plates (or alternatively on a single substrate) and sintered 284 in a furnace at from approximately 500 °C to approximately 1300 °C (and preferably from 1075°C to approximately 1150°C) in an argon atmosphere, for approximately three hours to approximately six hours. In some examples, the setter plate is removed from the furnace and placed at room temperature to air quench. In some other examples, the setter plate is left in the oven to cool over many hours (*e.g.,* for at least 2, 3, 4, 6, 12, 15, 18, 24, 30 or 36 hours). The ramp rate of the furnace is from about 1°C/min to about 10°C/min. Once removed from the furnace, the Li-stuffed garnet setter plate is polished 288 sequentially with 30 micron, 15 micron, 9 micron, and 5 micron alumina polishing powders. In some examples, the setter is polished using 30 microns alumina polishing powder.

In some examples, the setter plates are then subsequently thermally cycled (*i.e.,* seasoned) to reduce the tendency of the setter plate to stick to a given sintered film. As used herein, thermally cycling includes heating the setter plates without sintering a green film thereupon. This thermal cycling is associated with a grain growth in the setter plate. In between thermal cycling, the setter plate is either polished or is not polished. If the setter plate is polished following a thermal cycling, the setter plate is referred herein as a polished setter plate. If the setter plate is not polished following a thermal cycling, the setter plate is referred herein as an unpolished setter plate.

In some examples, set forth herein is a method of making a Li-stuffed garnet setter plate which includes mixing precursor materials, to form a mixture, in proportions sufficient to produce, upon reaction, a Li-stuffed garnet compound having a composition of LiₓLa_{y}-Zr_{z}Oₜ·qAl₂O₃, wherein 4<x<10, 1<y<4, 1<z<3, 6<t<14, 0≤q≤1; optionally calcining the mixture to form garnet powder; milling the mixture or the garnet powder; forming a pellet of the Li-stuffed garnet setter plate; placing the pellet onto a substrate; sintering the pellet at a temperature of from 450 °C to 1300 °C; and optionally cooling the pellet in air at 1 atmosphere of pressure and 25°C.

In some examples, the methods herein include forming a pellet comprises pressing the mixture or the garnet powder into a pellet of the Li-stuffed garnet setter plate.

In some examples, the methods herein include polishing the garnet setter plate.

In some examples, the methods herein include milling the mixed precursor materials including incorporating a binder or polymer selected from nitriles, nitrile butadiene rubber, carboxymethyl cellulose (CMC), styrene butadiene rubber (SBR), PVDF-HFP, PAN, aqueous-compatible polymers, atactic polypropylene (aPP), silicone, polyisobutylene (PIB), ethylene propylene rubber (EPR), PMX-200 PDMS (polydimethylsiloxane/polysiloxane, i.e., PDMS or silicone), polyacrylonitrile (PAN), polymethylmethacrylate (PMMA), poly vinylchloride (PVC), poly vinylbutyral (PVB), or poly(vinylidene) fluoride-hexafluoropropylene PVDF-HFP.

In some examples, the binder is PVB or Duramax B-1000 or Duramax B-1022 or polyethyleneimine.

In some examples, the methods herein include using the pellet in a seasoning sintering cycle.

In some examples, the substrate is a metal. In some examples, the substrate is metallic platinum or nickel.

In some of the methods herein, the proportions of the precursor materials are mixed to produce, upon reaction, a Li-stuffed garnet compound have the composition of LiₓLa₃Zr₂O₁₂·qAl₂O₃, wherein q is 0, 0.35, 0.5, 0.75, or 1 and x is between 5.0-7.7.

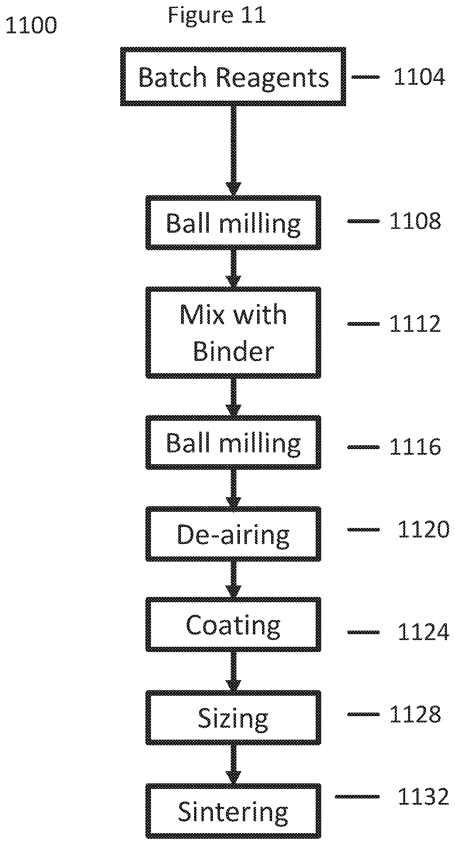

In some examples, a composite setter is made by the process, **1100,** set forth in FIG. 11. In FIG. 11, process **1100** describes an example for making a composite setter. In the first step, **1104,** includes combining reagents. In some examples, these reagents include an inert refractory material, a lithium source material, or the chemical precursors to either or both an inert refractory material and lithium source material. After batching these reagents together, they are milled in step **1108.** Next, the milled mixture is mixed with a binder in step **1112.** This mixture with the binder is milled in step **1116.** Next, in step **1120,** the milled mixture is de-aired to remove air, solvents, and other volatile species. In the coating step **1124,** the mixture is formed into a form factor. In the sizing step, **1128,** the form factor is adjusted in size if necessary. Next, in step **1132,** the form factor is sintered to make it dense.

### METHOD OF MAKING SINTERED ELECTROLYTE FILMS

In some examples, an unsintered thin film is prepared or cast so that it can be placed between setter plates in a subsequent sintering procedure. This process includes a slurry preparation step in which a combination of milled Li-stuffed garnet powder that is a product of the meta-step 204 is combined with one or more solvents, a binder, and a plasticizer (such as dibutyl phthalate).

In some examples, the slurry includes a solvent selected from isopropanol, water, butanol, tetrahydrofuran (THF), with a binder (*e.g.*, PVB), and/or a plasticizer. In some examples, the solvent includes about 10-30 % w/w isopropanol, 1-10 % w/w water, 1-10% w/w butanol, and 10-30 % w/w tetrahydrofuran (THF) [*e.g.* 100 grams garnet, 12 grams binder, 12 grams DBP, 20-30 grams solvent]. In some examples, the solvent includes about 20-30 % w/w isopropanol, 3-6 % w/w water, 3-6% w/w butanol, and 20-30 % w/w tetrahydrofuran (THF). In some examples, the binder is 5 % w/w. In some examples, the plasticizer is 5 % w/w. In these examples, the garnet or calcined precursor materials represent the remaining % w/w (e.g., 40, 50, or 60 % w/w). In some examples, a dispersant is used during the milling process. In some examples, the dispersant is a phosphate ester. In some examples, the plasticizer is dibutyl phthalate or benzyl butyl phthalate. In some examples, the solvent is butanol and THF. In some examples, the solvent is butanol, water and THF. In some examples, the solvent is butanol, water, toluene, and THF. In some examples, the solvent is butanol and toluene. In some examples, the solvent is butanol, water and THF.

Examples of solvents include toluene, ethanol, diacetone alcohol, and combinations thereof. Other examples of solvents include combinations of isopropanol, butanol, and toluene. Other examples of solvents include methanol, ethanol, isopropanol, butanol, pentanol, hexanol, toluene, xylene, tetrahydrofuran, toluene:ethanol, acetone, N-methyl-2-pyrrolidone (NMP) diacetone alcohol, ethyl acetate, acetonitrile, hexane, nonane, dodecane, methyl ethyl ketone (MEK), and combinations thereof.

Examples of binders, used to facilitate the adhesion between the Li-stuffed garnet particles, include, but are not limited to, polypropylene (PP), polyvinyl butyral (PVB), poly ethyl methacrylate (PMMA), polyvinyl pyrrolidone (PVP), atactic polypropylene (aPP), isotactive polypropylene ethylene propylene rubber (EPR), ethylene pentene copolymer (EPC), polyisobutylene (PIB), styrene butadiene rubber (SBR), polyolefins, polyethylene-copoly- 1-octene (PE-co-PO); PE-co-poly(methylene cyclopentane) (PE-co-PMCP); stereo block polypropylenes, polypropylene polymethylpentene copolymer, poly propylene carbonate, methyl methacrylate, ethyl methacrylate, and silicone. Other binders include binder is selected polypropylene (PP), atactic polypropylene (aPP), isotactic polypropylene (iPP), ethylene propylene rubber (EPR), ethylene pentene copolymer (EPC), polyisobutylene (PIB), styrene butadiene (SBR), polyolefins, polyethylene-co-poly-1-octene (PE-co-PO), PE-copoly(methylene cyclopentene) (PE-co-PMCP), stereoblock polypropylenes, polypropylene polymethyl pentene, polyethylene oxide (PEO), PEO block copolymers, silicone, and combinations thereof.

In order to make unsintered tape-cast films (*i.e.,* green films), which can be placed between setter plates for sintering, the following steps may be employed. The garnet precursors are combined with solvent and binder in amounts such that after sintering, the ratio of chemical reactants matches the ratio of the constituent components in the final garnet electrolyte film assuming no mass loss. These precursors are mixed and milled. After about 8 hours, a plasticizer is added in an amount of approximately 5 weight % of the combined components. Solvent is added in an amount of approximately 5-50 weight % of the combined components. Mixing and milling may optionally continue after the addition of the plasticizer and solvent for another 12 hours. After the completion of the mixing and milling, the resulting slurry is filtered to remove any remaining grinding media and agglomerates or to ensure the homogeneity of the particle sizes therein. The slurry can then be cast, *e.g.,* by doctor blading, to prepare a thin film of unsintered green film.

In some embodiments, the unsintered green film is then placed on top of a Li-stuffed garnet setter plate to fabricate a Li-stuffed garnet solid electrolyte. In such embodiments, the unsintered green film is sintered on top of the Li-stuffed garnet setter plate to form a sintered garnet film. A metal foil or metal powder can optionally be placed between the setter plate and the unsintered green film prior to sintering. The metal foil or metal powder can be selected from the group consisting of: Ni, Cu, Fe, Al, Ag, alloys thereof, or combinations thereof. Additional embodiments are described in further detail below.

In some examples, a setter plate is placed on top of the unsintered green film which is itself on top of a Li-stuffed garnet setter plate and subsequently sintered to fabricate a Li-stuffed garnet solid electrolyte.

In some examples, set forth herein is a method of using a Li-stuffed garnet setter plate to fabricate a Li-stuffed garnet solid electrolyte for a rechargeable battery, wherein the method includes: placing a green film of unsintered Li-stuffed garnet precursor materials between two Li-stuffed garnet setter plates; and sintering the green film between the two Li-stuffed garnet setter plates.

In some examples, set forth herein is a method of using a Li-stuffed garnet setter plate to fabricate a Li-stuffed garnet solid electrolyte for a rechargeable battery, wherein the method includes placing a green film of unsintered Li-stuffed garnet precursor materials on top of a Li-stuffed garnet setter plate; and sintering the green film on top of the Li-stuffed garnet setter plate to form a sintered garnet film.

In some examples, the methods herein further include placing a metal foil or metal powder between at least one setter plate and the green film prior to the sintering the green film. In some examples, the methods herein further include placing a metal foil or metal powder between the setter plate and the green film prior to the sintering the green film.

In some examples, the metal is Ni, Cu, Fe, Al, Ag, combinations thereof, or alloys thereof.

In some examples, the green film has a surface defined by a first lateral dimension from 1 cm to 50 cm and a second lateral dimension from 1 cm to 50 cm. In other examples, the green film has a surface defined by a first lateral dimension from 1 cm to 30 cm and a second lateral dimension from 1 cm to 30 cm.

In some examples, the green film has a thickness between 1 µm to about 100 µm. In other examples, the green film has a thickness between 20 µm to about 100 µm.

In some examples, the sintering includes heating the green electrolyte film and the two Li-stuffed garnet setter plates to between 450 °C and 1300 °C.

In some examples, the sintering comprises heating the green electrolyte film and a Li-stuffed garnet setter plate to between 450 °C and 1300 °C.

In some examples, the sintering comprises exposing, during the heating, the green film and the two Li-stuffed garnet setter plates to an Argon:H₂ mixed atmosphere.

In some examples, the sintering comprises exposing, during the heating, the green film and the two Li-stuffed garnet setter plates to an Argon atmosphere.

In some examples, the green film is an unsintered green film. In certain examples, the green film is a tape-cast green film.

In some examples, the sintering comprises exposing, during the heating, the tape-cast green film and the two Li-stuffed garnet setter plates to an Argon:H₂:H₂O mixed atmosphere.

In some examples, the sintering comprises exposing, during the heating, the green film and the two Li-stuffed garnet setter plates to an oxygen-containing atmosphere.

In some examples, the sintering comprises exposing, during the heating, the green film and the two Li-stuffed garnet setter plates to 95:5::Argon:H₂ atmosphere.

In some examples, the sintering produces a sintered Li-stuffed garnet solid electrolyte less than 100 microns thick and more than 1 nm thick. In some examples, the sintering produces a sintered Li-stuffed garnet solid electrolyte less than 80 microns thick. In some examples, the sintering produces a sintered Li-stuffed garnet solid electrolyte less than 70 microns thick. In certain examples, the sintering produces a sintered Li-stuffed garnet solid electrolyte less than 60 microns thick. In certain examples, the sintering produces a sintered Li-stuffed garnet solid electrolyte less than 50 microns thick. In certain examples, the sintering produces a sintered Li-stuffed garnet solid electrolyte less than 40 microns thick. In certain examples, the sintering produces a sintered Li-stuffed garnet solid electrolyte less than 30 microns thick. In certain examples, the sintering produces a sintered Li-stuffed garnet solid electrolyte less than 20 microns thick.

In some examples, the sintered Li-stuffed garnet solid electrolyte prepared by the methods herein has an ASR from between 0.5 Ω.cm² to 10 Ω.cm² at 50 °C. In other examples, the sintered Li-stuffed garnet solid electrolyte has an ASR from less than 10 Ω.cm² at 50 °C. In yet other examples, the sintered Li-stuffed garnet solid electrolyte has an ASR from less than 10 Ω.cm² at 0 °C. In other examples, the sintered Li-stuffed garnet solid electrolyte has an ASR from less than 20 Ω.cm² at -30 °C. In still other examples, the sintered Li-stuffed garnet solid electrolyte has an ASR from less than 20 Ω.cm² at -30 ∘C but more than 1 Ω.cm². In some examples, the sintered Li-stuffed garnet solid electrolyte has a thickness of 80 µm and has an ASR from less than Ω.cm² at 50 °C. In still other examples, the sintered Li-stuffed garnet solid electrolyte has a thickness of 80 µm and has an ASR from less than Ω.cm² at 20 °C.

In some examples, the sintered Li-stuffed garnet solid electrolyte has a surface roughness of from 1.0 µm Ra to 4 µm Ra, wherein Ra is an arithmetic average of absolute values of sampled surface roughness amplitudes. In some other examples, the sintered Li-stuffed garnet solid electrolyte has a surface roughness from 1.6 µm Ra to 2.2 µm Ra, wherein Ra is an arithmetic average of absolute values of sampled surface roughness amplitudes. In some other examples, the sintered Li-stuffed garnet solid electrolyte has a surface roughness 3.2 µm Ra to 3.7 µm Ra, wherein Ra is an arithmetic average of absolute values of sampled surface roughness amplitudes.

In some examples, the methods include seasoning the two Li-stuffed garnet setter plates by using each at least once in a sintering cycle prior to the step of placing a tape-cast film of unsintered Li-stuffed garnet precursor materials between two Li-stuffed garnet setter plates.

In some examples, the methods include seasoning the two Li-stuffed garnet setter plates by using each at least once in a heating and cooling (thermal) cycle prior to the step of placing a tape-cast film of unsintered Li-stuffed garnet precursor materials between two Li-stuffed garnet setter plates.

In some examples, the methods include using the two Li-stuffed garnet setter plates at least once in a seasoning sintering cycle, wherein the using is associated with a grain size increase in each of the two Li-stuffed garnet setter plates, prior to the step of placing a tape-cast film of unsintered Li-stuffed garnet precursor materials between two Li-stuffed garnet setter plates.

In some examples, the methods include using the two Li-stuffed garnet setter plates at least once in a seasoning sintering cycle for enlarging a grain size in each of the two Li-stuffed garnet setter plates.

In some examples, the methods include using the two Li-stuffed garnet setter plates at least three time in a seasoning sintering cycle for either, or both, enlarging a grain size in each of the two Li-stuffed garnet setter plates or for reducing the tendency of the Li-stuffed garnet setter plates to adhere to a film during a subsequent sintering step, wherein the seasoning is prior to the step of placing a tape-cast film of unsintered Li-stuffed garnet precursor materials between two Li-stuffed garnet setter plates.

In some examples, the methods comprising using the two Li-stuffed garnet setter plates at least five time in a seasoning sintering cycle.

In some examples, the methods include depleting the Li concentration in the garnet setter by using the two Li-stuffed garnet setter plates at least one time in a seasoning thermal cycle. In some of these methods, the garnet setters have a reduced tendency to stick or adhere to sintering thin films.

In some examples, set forth herein is a method of using a Li-stuffed garnet setter plate to fabricate a Li-stuffed garnet solid electrolyte for a rechargeable battery, wherein the method includes placing a green film of unsintered Li-stuffed garnet precursor materials between two setter plates selected from Li₂ZrO₃, xLi₂O-(1-x)SiO₂ (where x=0.01-0.99), aLi₂O-bB₂O₃-cSiO₂ (where a+b+c=1), LiLaO₂, LiAlO₂, Li₂O, Li₃PO₄, a Li-stuffed garnet, or combinations thereof; and sintering the green film between the two setter plates.

In some examples, set forth herein is a method of using a Li-stuffed garnet setter plate to fabricate a Li-stuffed garnet solid electrolyte for a rechargeable battery, wherein the method includes placing a green film of unsintered Li-stuffed garnet precursor materials between two setter plates selected from Li₂ZrO₃, xLi₂O-(1-x)SiO₂ (where x=0.01-0.99), aLi₂O-bB₂O₃-cSiO₂ (where a+b+c=1), LiLaO₂, LiAlO₂, Li₂O, Li₃PO₄, a Li-stuffed garnet, or combinations thereof; and sintering the green film between the two setter plates.

In any of the methods herein, the green film may be a tape-cast film.

In some examples, the sintering atmosphere comprises, Air, Argon, Nitrogen, an Argon:H₂ mixture, or an Argon:H₂:H₂O mixture.

In some examples, the binder is an acrylic binder.

In some examples, the binder poly methyl methacrylate or ethyl-methyl methacrylate.

In some examples, set forth herein is a method of sintering a green film including a Li-stuffed garnet or the chemical precursors to a Li-stuffed garnet, wherein the methods includes providing a green film including a Li-stuffed garnet or the chemical precursors to a Li-stuffed garnet; and sintering the green film in proximity to a Li-stuffed garnet setter such that the setter prevents the loss of Li from the sintering green film.

In some examples, set forth herein is a method of sintering a green film including a Li-stuffed garnet or the chemical precursors to a Li-stuffed garnet, wherein the method includes providing a green film comprising a Li-stuffed garnet or the chemical precursors to a Li-stuffed garnet; and sintering the green film in proximity to a Li-stuffed garnet setter such that the setter maintains the amount of Li in the sintering green film.

In some examples, set forth herein is a method of sintering a green film including a Li-stuffed garnet or the chemical precursors to a Li-stuffed garnet, including providing a green film comprising a Li-stuffed garnet or the chemical precursors to a Li-stuffed garnet; and sintering the green film in proximity to a Li-stuffed garnet setter such that the setter maintains the amount of Li in the sintering green film; wherein the sintering is in an over or furnace wherein the partial pressure of Li(g) LiO(g), and/or Lᵢ₂O(g) is between 10 and 10⁻⁵ Pascals (Pa).

In some of these methods, the green film is on top of at least one Li-stuffed garnet setter.

In some examples, the methods herein include placing a metal foil or metal powder between the setter plate and the green film prior to the sintering the green film. In some examples, the metal is Ni, Cu, Fe, Al, Ag, combinations thereof, or alloys thereof.

In some examples, the green film has a surface defined by a first lateral dimension from 1 cm to 50 cm and a second lateral dimension from 1 cm to 50 cm. In some examples, the green film has a thickness between 1 µm to about 100 µm. In some examples, the green film has a thickness between 10 µm to about 50 µm.

In some of the examples herein, the sintering comprises heating the green electrolyte film and the setter plate to between 450 °C and 1300 °C.

In some examples, the sintering comprises exposing, during the heating, the green film and the two Li-stuffed garnet setter plate to an Argon:H₂ mixed atmosphere.

In some examples, the sintering comprises exposing, during the heating, the green film and the Li-stuffed garnet setter plate to an Argon atmosphere.

In some examples, the green film is an unsintered green film. In some of these examples, the green film is a tape-cast green film.

In some examples, the sintering includes exposing, during the heating, the tape-cast green film and the two Li-stuffed garnet setter plates to an Argon:H₂:H₂O mixed atmosphere.

In some examples, the sintering includes exposing, during the heating, the green film and the two Li-stuffed garnet setter plates to an oxygen-containing atmosphere.

In some examples, the sintering includes exposing, during the heating, the green film and the two Li-stuffed garnet setter plates to 95:5::Argon:H₂ atmosphere.

In some examples, the sintering produces a sintered Li-stuffed garnet solid electrolyte less than 100 microns thick and more than 1 nm thick. In some other examples, the sintering produces a sintered Li-stuffed garnet solid electrolyte less than 50 microns thick. In some examples, the sintering produces a sintered Li-stuffed garnet solid electrolyte less than 40 microns thick. In some other examples, the sintering produces a sintered Li-stuffed garnet solid electrolyte less than 30 microns thick. In some examples, the sintering produces a sintered Li-stuffed garnet solid electrolyte less than 20 microns thick. In other examples, the sintered Li-stuffed garnet solid electrolyte has an ASR from between 0.1 Ω.cm² to 10 Ω.cm² at 0 °C.

In some examples, set forth herein, during the sintering, the partial pressure of Li(g), LiO(g), or Lᵢ₂O(g) and is 10⁻¹ Pa. In other examples, the partial pressure of Li(g), LiO(g), or Lᵢ₂O(g) is 10⁻² Pa. In some other examples, the partial pressure of Li(g), LiO(g), or Li₂O(g) is 10⁻³ Pa. In yet other examples, the partial pressure of Li(g), LiO(g), or Lᵢ₂O(g) is 10⁻⁴ Pa. In some other examples, the partial pressure of Li(g), LiO(g), or Lᵢ₂O(g) is 10⁻⁵ Pa.

### POLISHING AND PHASE ASSEMBLAGE

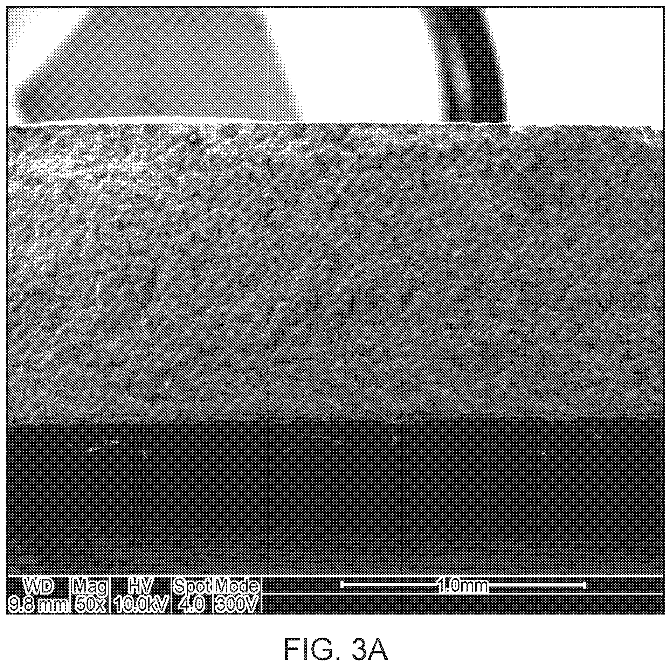

An example Li-stuffed garnet setter plate produced from method 200 is shown in FIG. 3A, which is a cross-sectional scanning electron micrograph of a Li-stuffed garnet setter plate of the present disclosure. The image of FIG. 3A includes a scale marker and was taken in a scanning electron microscope (SEM) at an accelerating voltage of 10keV for a magnification of approximately 50x. The scale bar in FIG 3A is 1.0 mm. As is shown, the grain size of the Li-stuffed garnet setter plate in FIG. 3A is approximately 3 microns to approximately 5 microns. In other embodiments, the grain size of the Li-stuffed garnet setter plate is between 2 microns and 10 microns. The thickness of the Li-stuffed garnet setter plate is approximately 1.2 mm. In one embodiment, Li-stuffed garnet setter plates having a thickness of approximately 1 mm to approximately 2 mm, a grain size of from 5 microns to 10 microns, and cast. The plates may be cast into or later singulated into a square or rectangular format of the desired dimensions, for example approximately 10 cm per side. Li-stuffed garnet setter plates that are thinner than approximately 0.1 or 0.5 mm and/or have grains of a d₅₀ larger than approximately 500 microns are prone to mechanical failure during use. The weight of the Li-stuffed garnet setter plate itself, when combined with grains having a characteristic dimension (e.g., a diameter or length of a crystal edge) that is about the thickness of the setter plate, may cause formation and/or propagation of inter-grain cracks. These cracks may cause the Li-stuffed garnet setter plates to fracture, rending them inadequate for continued use as setter plates.

Furthermore, the preferred grain size and surface features can be produced by cycling a Li-stuffed garnet setter plate from two to five times under temperatures used to produce Li-stuffed garnet solid electrolyte (*i.e.*, seasoning the setter plate). Furthermore, the preferred grain size and surface features is produced when a Li-stuffed garnet setter plate is placed in contact with Li-stuffed garnet solid electrolyte and cycled according to the temperatures and pressures described in U.S. Patent Application Publication No. U.S. 2015/0099190, which published April 9, 2015. This "sacrificial sintering" or "seasoning sintering" has the added benefit of preserving the lithium content and garnet phase in both the setter plate and solid electrolyte. In between the seasoning thermal cycles, the setter plates may be polished or not polished.

The lithium stuffed garnets described herein include crystalline garnet in combination with amorphous garnet. The crystalline component of the setter is the grains, which may be single crystals or which may be polycrystalline agglomerates. In some examples, the grains of the garnet setter are single crystals of garnet. In other examples, the grains of the garnet setter are polycrystalline. In the methods disclosed herein, seasoning the setters through thermal cycling has the unexpected benefit of conditioning the setters such that the setters are prevented from sticking to the sintering film that is placed between setter plates during a sintering procedure.

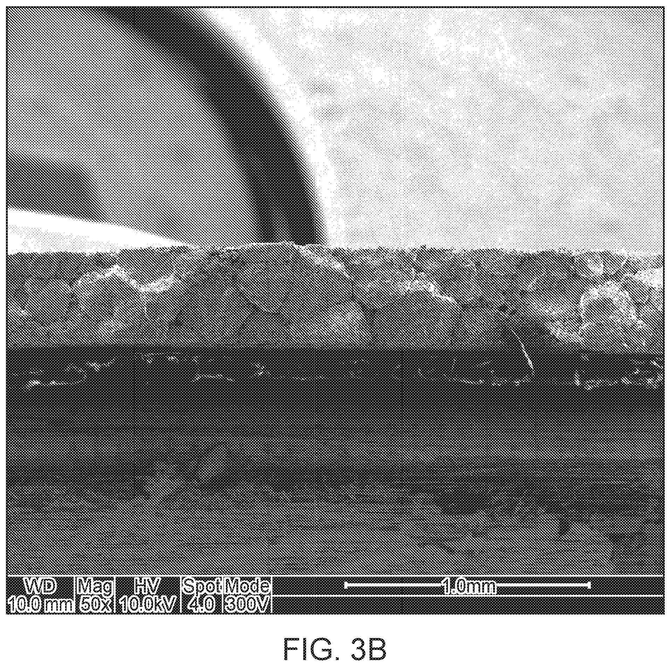

FIG. 3B shows a Li-stuffed garnet setter plate that has been used in the preparation of Li-stuffed garnet solid electrolyte, and therefore thermally cycled repeatedly (in this case from between about 10 times and about 20 times) during the electrolyte sintering stage. As is shown, the setter plate itself is approximately 400 microns (0.4 mm) thick, and the grains therein range from approximately 100 microns to approximately 300 microns. This grain size has been found to grown in association with the thermal cycling, which results in setters that stick less to a given sintering film. One benefit of seasoning the setter plates is to reduce the ability of the setter plate to absorb Li from a sintering Li electrolyte.

Other benefits include a more crystalline garnet setter plate. Other benefits include a garnet setter plate lacking surface impurities. Other benefits include a garnet setter plate that has a lower chemical potential to absorb Li from the sintering garnet film. Additionally, thermally cycling the setter before first use with films reduces the tendency for sticking between setter and film. In some examples setters should be thermally cycled from 1- 5 times in addition to the primary sintering step.

In some examples, the setter plates are polished prior to each instance of thermal cycling to expose a fresh surface. Without thermal treatment the first few uses of a setter can result in increased prevalence of sticking between setter and thin film.

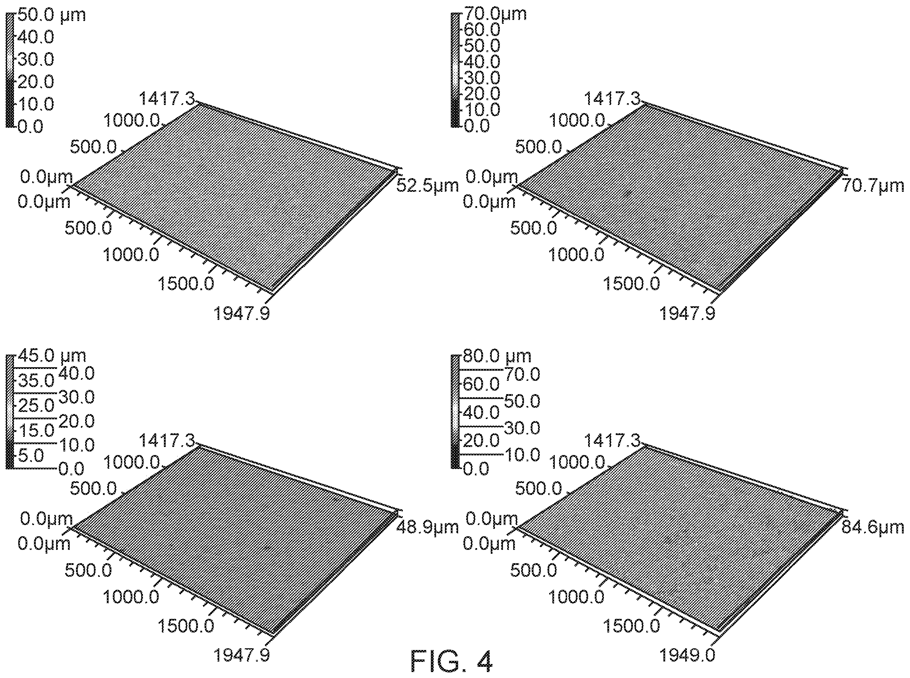

FIG. 4 illustrates surface roughness measurements of four example Li-stuffed setter plate produced by the method 200. The top two images are for polished setter plates, and the bottom two images are for unpolished setter plates. As can be seen, even prior to polishing, each of the rectangular sample areas of a setter plate (from approximately 1.4 mm to 2mm per side) has a surface topography that is quite uniform. As can be seen, occasional protrusions of up to 50 microns extend from portions of the surface. This produces a surface roughness for Li-stuffed garnet setter plates having small grains (2 microns to 10 microns) from approximately 1.8 Ra to approximately 2.4 Ra when polished compared to from approximately 2.0 Ra to 2.7 Ra when left unpolished. For Li-stuffed garnet setter plates having large grains (100 microns to 400 microns), the surface roughness is from 3.5 Ra to 5.6 Ra when either polished or unpolished. Ra is a unit for quantifying surface roughness and is calculated from an arithmetic average of all absolute values of roughness amplitudes measured on a given sample.

In some other examples, another way to describe the Li-stuffed garnet setter plates described herein includes the Rt parameter which is equal to Rₚₑₐₖ - R_{valley} and represents the maximum peak height in a given surface roughness measurement. In some examples, the Rt can range from about 1 µm to 30 µm. In some examples, the Rt can range from about 1 µm to 28 µm. In some examples, the Rₜ can range from about 10 µm to 30 µm. In some examples, the Rt can range from about 15 µm to 30 µm.

The uniform topography with only small protrusions (generally removed or reduced in height during polishing) is one of the unexpected benefits of Li-stuffed setter plate. This uniform topography facilitates a uniform and planar surface on Li-stuffed solid electrolytes produced using the Li-stuffed setter plates, which in turn encourages intimate electrical contact between the solid electrolyte and corresponding positive and negative electrodes of a battery cell.

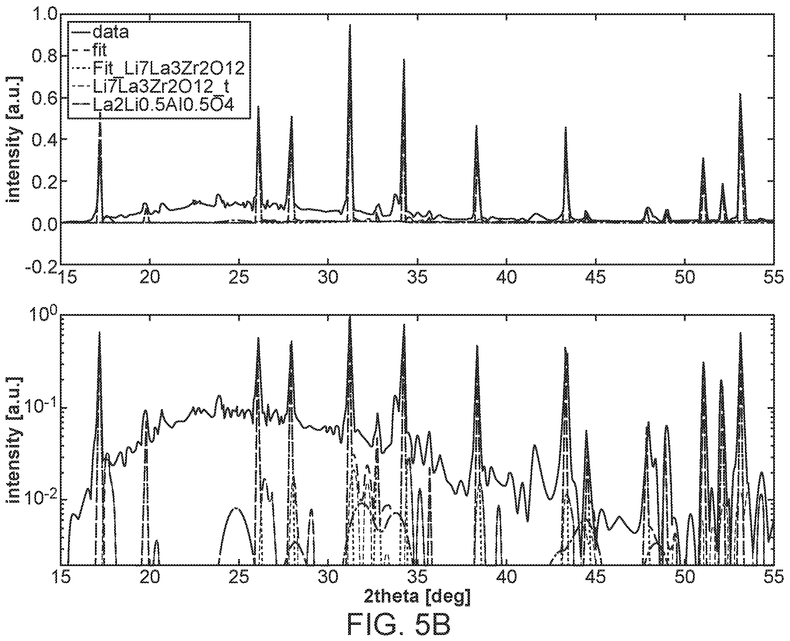

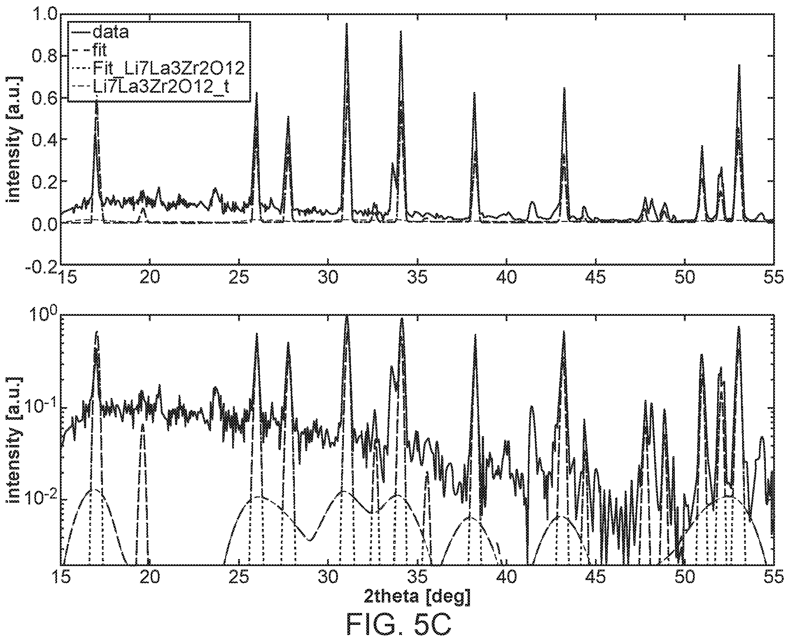

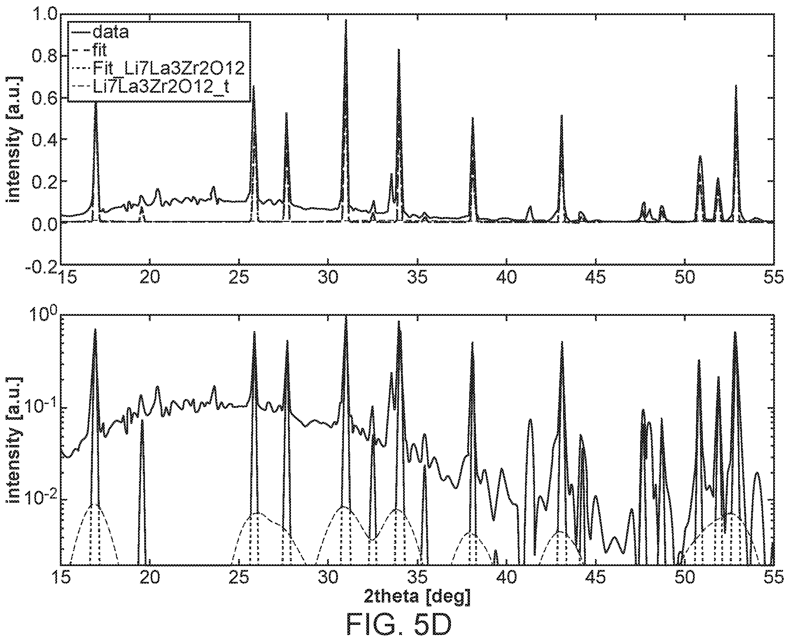

The effect of re-polishing (*i.e.,* polishing between thermal cycling) Li-stuffed garnet setter plates prior to their use in sintering an unsintered film, and grain size of Li-stuffed garnet setter plates on the phase produced in Li-stuffed garnet solid electrolyte has also been studied. FIGS. 5A-5D illustrate X-ray diffraction patterns (produced by Cu K-alpha and measured via a 2-theta detector configuration) of Li-stuffed garnet solid electrolyte produced by various combinations of polished and unpolished Li-stuffed garnet setter plates of varying grain sizes . In the graph of FIG. 5A, an X-ray diffraction pattern is shown of a Li-stuffed solid electrolyte produced using a re-polished Li-stuffed garnet setter plate having small grains of a d₅₀ of approximately 2 - 10 um. In the graph of FIG. 5B, an X-ray diffraction pattern is shown of a Li-stuffed solid electrolyte produced using an unpolished Li-stuffed garnet setter plate having small grains of a d₅₀ of approximately 2 - 10 um. In the graph of FIG. 5C, an X-ray diffraction pattern is shown of a Li-stuffed solid electrolyte produced using a re-polished Li-stuffed garnet setter plate having large grains of a d₅₀ of approximately 100 - 400 um. In the graph of FIG. 5D, an X-ray diffraction pattern is shown of a Li-stuffed solid electrolyte produced using an unpolished (*i.e.,* not refinished after thermally cycling the setter after it was initially produced and then polished prior to the thermal cycling) using a Li-stuffed garnet setter plate having large grains of a d₅₀ of approximately 100 - 400 um. As is evident upon inspection, all of the X-ray diffraction patterns show the presence and retention of the Li-stuffed garnet phase in the sintered film.

Highly conductive garnet electrolyte were prepared using Li-stuffed garnet setter plates that are polished and have grain sizes from approximately 100 microns to approximately 400 microns. Other highly conductive garnet electrolytes were prepared using unpolished Li-stuffed garnet setter plates having grain sizes from approximately 100 microns to approximately 400 microns. Some other highly conductive garnet electrolyte were prepared using Li-stuffed garnet setter plates are those that are unpolished and have a grain size from approximately 2 microns to 10 microns. Equally conductive garnet electrolyte were prepared using Li-stuffed garnet setter plates are those that are polished and have a grain size from approximately 2 microns to 10 microns.

### METHOD OF USING SETTERS

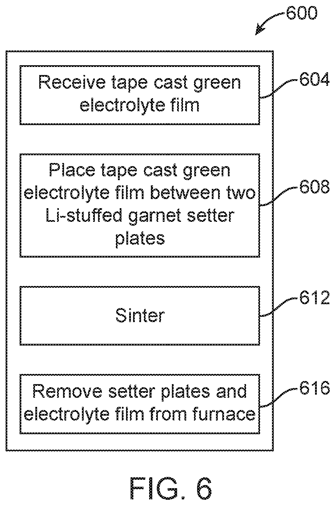

FIG. 6 illustrates a method 600 of using Li-stuffed garnet setter plates to fabricate Li-stuffed garnet solid electrolyte. A tape-cast "green film" (*i.e.,* a film of unsintered Li-stuffed garnet precursor materials, binders, and other materials used in the preparation of Li-stuffed garnet solid electrolyte as described in U.S. Patent Application Publication No. U.S. 2015/0099190, which published April 9, 2015), and is received 604 in preparation for sintering. The tape-cast green film is placed between two Li-stuffed garnet setter plates of the present disclosure in step 608. In some examples, a tape-cast green film is placed on top of a Li-stuffed garnet setter plate. In one embodiment, each of Li-stuffed garnet setter plates is approximately square in shape from a plane view with approximately 10 cm on each of four sides, and is approximately 1 mm to approximately 2 mm thick. Thus placed, the solid electrolyte "green film" is sintered 612 in a 99.94:0.06::Argon:H₂ atmosphere at about 1100°C, although temperatures from approximately 850°C to approximately 1300°C have also been found to be effective at producing Li-stuffed garnet phase in the sintered electrolyte. In some examples, the green film is sintered in an Argon:H₂ atmosphere at 850°C. In some examples, the green film is sintered in an Argon:H₂ atmosphere at 900°C. In some examples, the green film is sintered in an Argon:H₂ atmosphere at 950°C. In some examples, the green film is sintered in an Argon:H₂ atmosphere at 1000°C. In some examples, the green film is sintered in an Argon:H₂ atmosphere at 1050°C. In some examples, the green film is sintered in an Argon:H₂ atmosphere at 1100°C. Sintering is performed from 0.5 hours to 6 hours. In some examples, sintering is performed until the green film achieves its maximum possible density. In other examples, the solid electrolyte "green film" is sintered 612 in a 95:5::Argon:H₂ atmosphere at about 1100°C, although temperatures from approximately 850°C to approximately 1300°C have also been found to be effective at producing Li-stuffed garnet phase in the sintered electrolyte. Sintering is then performed from 0.5 hours to 6 hours (*e.g.,* 4 hours).

For example, sintering can be performed for about 0.5 hours, 1 hour, 2 hours, 3 hours, 4 hours, 5 hours, 6 hours, or for any duration of time between any two of these values.

In some examples, the green film is sintered in a Nitrogen:H₂ atmosphere at 850°C. In some examples, the green film is sintered in a Nitrogen:H₂ atmosphere at 900°C. In some examples, the green film is sintered in a Nitrogen:H₂ atmosphere at 950°C. In some examples, the green film is sintered in a Nitrogen:H₂ atmosphere at 1000°C. In some examples, the green film is sintered in a Nitrogen:H₂ atmosphere at 1050°C. In some examples, the green film is sintered in a Nitrogen:H₂ atmosphere at 1100°C.

In some examples, the green film is sintered in a Nitrogen atmosphere at 850°C. In some examples, the green film is sintered in a Nitrogen atmosphere at 900°C. In some examples, the green film is sintered in a Nitrogen atmosphere at 950°C. In some examples, the green film is sintered in a Nitrogen atmosphere at 1000°C. In some examples, the green film is sintered in a Nitrogen atmosphere at 1050°C. In some examples, the green film is sintered in a Nitrogen atmosphere at 1100°C.

In some examples, an oven is heated from room temperature to the sintering temperature with the setter plates and the unsintered film therebetween inside the heating oven. In some other examples, the samples are placed into an oven that is already hot. In some examples, the samples are cooled naturally by removing them from the oven. For example, the samples can be removed from the oven and placed at room temperature (about 22°C to 25°C.) In other examples, the samples are controllably cooled by slowly reducing the temperature of the oven. Cooling protocols are used so as to avoid thermal shock of the ceramic.

The setter plates and solid electrolyte are removed 616 from the furnace. One unexpected benefit of Li-stuffed garnet setter plates of the present disclosure (in addition to preserving the Li-stuffed garnet phase of the solid electrolyte mentioned above) is the low adhesion of Li-stuffed garnet setter plates to the solid electrolyte and the relatively beneficial density of the Li-stuffed garnet setter plates compared to commercially available setter plates conventionally used such as porous Yttria stabilized Zirconia, alumina, graphite. Because of the appropriate density and low adhesion, the Li-stuffed garnet setter plates are removed from the Li-stuffed garnet solid electrolyte without damaging the solid electrolyte, which can be relatively fragile when only from approximately 10 microns to approximately 100 microns thick. This range of thickness values of the solid electrolyte is useful for producing a solid state battery having adequate ionic conductivity and energy delivery rates, as mentioned above. Commercially available setter plates (such as alumina, zirconia, and platinum) are generally not suitable for use (e.g., reactive) in the production of Li-stuffed garnet solid electrolyte because they stick to or adhere to the sintered film and will often cause cracking or mechanical failure, and poor electrical properties, of the solid electrolyte having a thickness from 10 microns to 100 microns.

The lithium-stuffed garnet setters and the composite setters described herein can be used in a variety of methods.

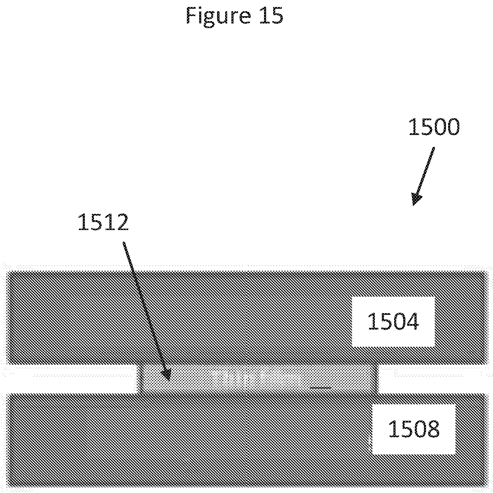

As shown in FIG. 15, one method of using setters includes set-up, **1500.** In this example, a green film, **1512,** is positioned between two setters, **1504** and **1508.** Setters, **1504** and **1508,** are each individually in each instance selected from composite setters or lithium-stuffed garnet setters, as described herein.

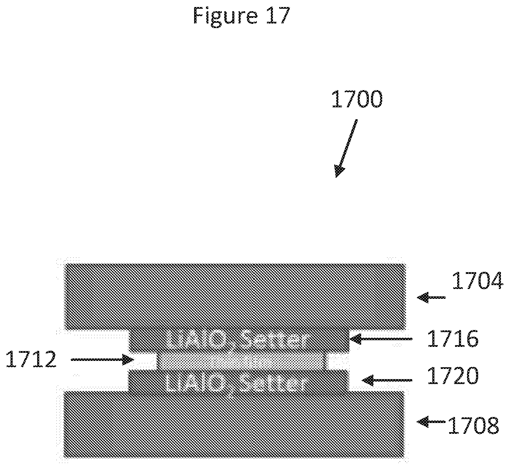

As shown in FIG. 17, one method of using setters includes set-up, **1700.** In this example, a green film, **1712,** is positioned between two inert refractory setters, **1716** and **1720.** The two inert refractory setters, **1716** and **1720,** are positioned between setters, **1704** and **1708.** Setters, **1704** and **1708,** are each individually in each instance selected from composite setters or lithium-stuffed garnet setters, as described herein.

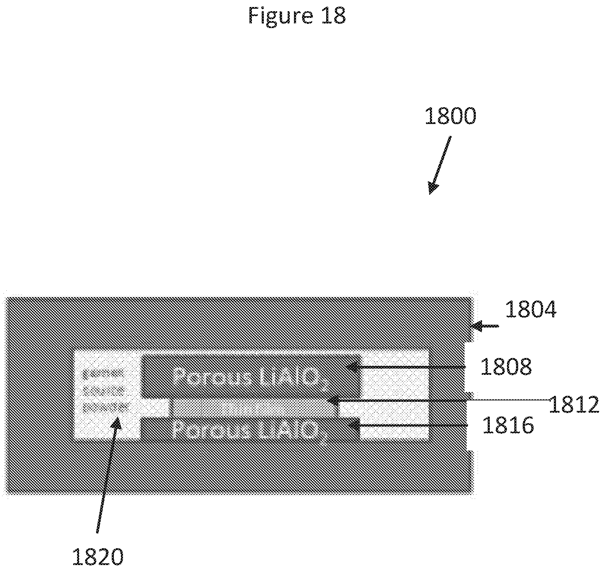

As shown in FIG. 18, one method of using setters includes set-up, **1800,** which is in an enclosed environment, **1804.** In some examples, the enclosed environment is an oven. In some examples, the enclosed environment is a furnace. In this example, a green film, **1812,** is positioned between two porous inert refractory setters, **1808** and **1816.** The two inert refractory setters, **1808** and **1816,** are positioned in the enclosed environment with a lithium source material, **1820,** in proximity thereto.

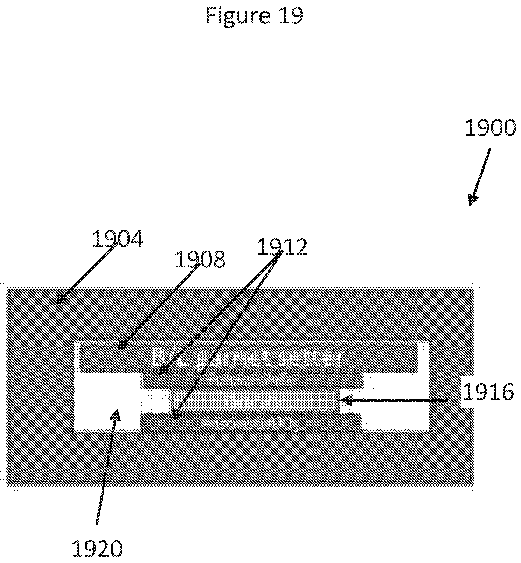

As shown in FIG. 19, one method of using setters includes set-up, **1900,** which is in an enclosed environment, **1904.** In some examples, the enclosed environment is an oven. In some examples, the enclosed environment is a furnace. In this example, a green film, **1916,** is positioned between two porous inert refractory setters, **1912.** A lithium-stuffed garnet setter, **1908,** is placed in proximity to the two porous inert refractory setters, **1912.** In some examples, the lithium-stuffed garnet setter, **1908,** is placed on top of one of the two porous inert refractory setters, **1912.** The two inert refractory setters, **1912,** are positioned in the enclosed environment, **1904.** In some examples, **1920** is a vacuum. In some examples, **1920** is a sintering environment described herein such as, but not limited to, Ar, Ar:H₂, N₂, N₂:H₂, and Ar:H₂:H₂O.

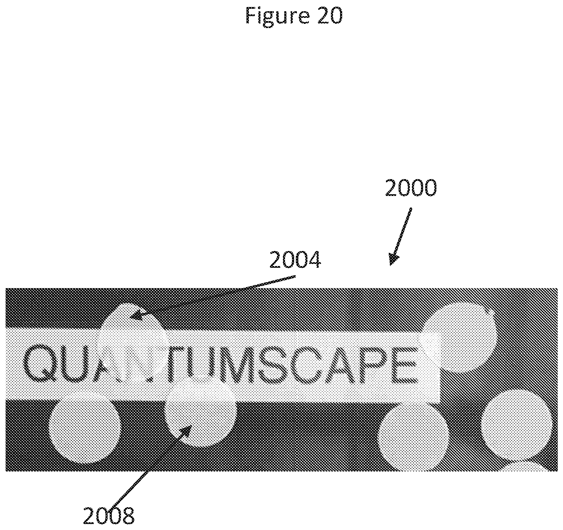

As shown in FIG. 20, thin films of sintered lithium-stuffed garnet electrolyte, **2004** and **2008,** can be prepared by the method in FIG. 6. These sintered lithium-stuffed garnet electrolyte, **2004** and **2008,** are dense and thin. As shown in FIG. 20, the sintered lithium-stuffed garnet electrolyte, **2004** and **2008,** are in some examples thin enough to be transparent. The disclosure also includes the method in FIG. 6 but wherein step **608** is substituted with a step wherein a green film is placed between two composite setter plates.

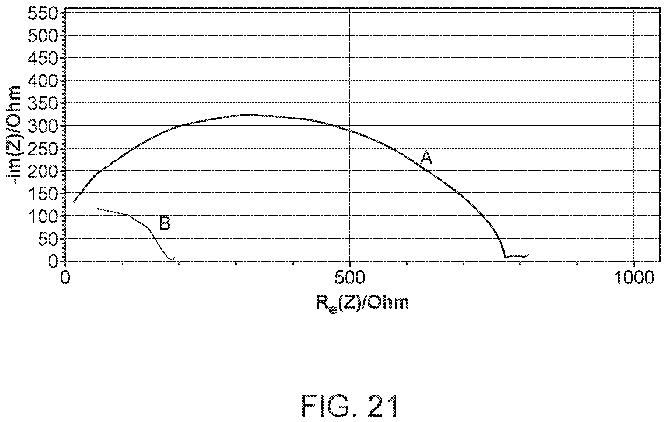

A Nyquist plot of these films sintered according to the methods herein is shown in FIG. 21.

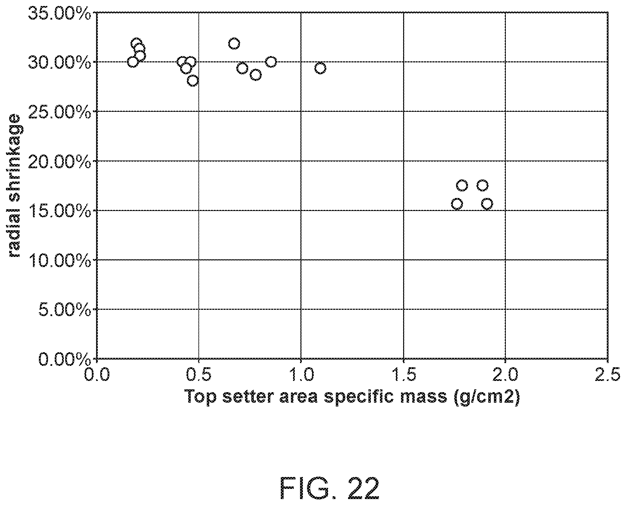

FIG. 22 shows the results of observing the radial shrinkage in green films during and after sintering as a function of the area specific mass of the top setter. The plot is percent radial shrinkage as a function of the top setter plate's area specific mass (g/cm²). FIG. 22 shows the benefits, in part, to a setter that has a mass areal density of about 0.2 g/cm² to about 4 g/cm².

### ELECTRICAL PERFORMANCE

While the benefits to the mechanical performance of setter plates have been presented above for Li-stuffed garnet setter plates of the present disclosure, benefits are also present with respect to electrical performance, specifically the ionic conductivity, of Li-stuffed garnet solid electrolyte produced using Li-stuffed garnet setter plates of the present disclosure.

Lithium-stuffed garnet films were fabricated according to the method in FIG. 6. The films were characterized by an empirical formula Li₇La₃Zr₂O₁₂Al₂O₃. The films were sintered between lithium-stuffed garnet setter plates at 1150°C for 6 hours. After sintering, the films were approximately 50 µm thick and circularly shaped with a top surface area of approximately 0.5 cm². Area specific resistance or "ASR," as described in U.S. Patent Application Publication No. U.S. 2015/0099190, which published April 9, 2015, was measured by electrical impedance spectroscopy for these films at 20°C, 50°C, 60°C, or 80°C. Both AC and DC impedance test were conducted on these films with lithium electrodes deposited on each side. The results are tabulated below in **Table 1,** wherein **R1** represents the bulk resistance, **R2** represents the interfacial resistance, and ASR equals (**R2**/2)*Area, where the factor of 2 is to account for the 2 interfaces in the test. In this Example, the area was approximately 0.5 cm².

**Table 1**

| | **R1** (Ω) | **R1** (Ω) | ASR (Ωcm²) |
|---|---|---|---|
| 80 °C | 9.9 ± 0.1 | 0.0 | 0 |
| 60 °C | 16 ± 0.1 | 0.0 | 0 |
| 50 °C | 20.9 ± 0.2 | 0.0 | 0 |
| 20 °C | 46.2 ± 0.4 | 6.5 | 1.6 |

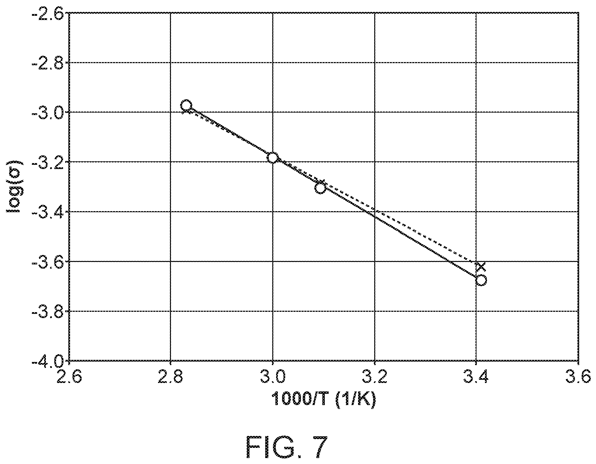

FIG. 7 shows an Arrhenius plot of EIS (AC Impedance) test results at 80°C, 60°C, 50°C and 20°C on three Li-stuffed garnet solid electrolyte samples in a symmetric Li|Garnet|Li cell. A conductivity value 1.03E-3 S/cm at 60°C was observed. These results show surprisingly high ionic conductivity for Li-stuffed garnet solid electrolytes prepared using the garnet setter plates of the instant disclosure. As indicated by FIG. 7, low interfacial impedance values are achievable when metallic lithium is deposited on the Li-stuffed garnet electrolyte after fabrication is completed according to the method 600. FIG. 7 is an Arrhenius plot of conductivity as function of 1000/T for the films tested.

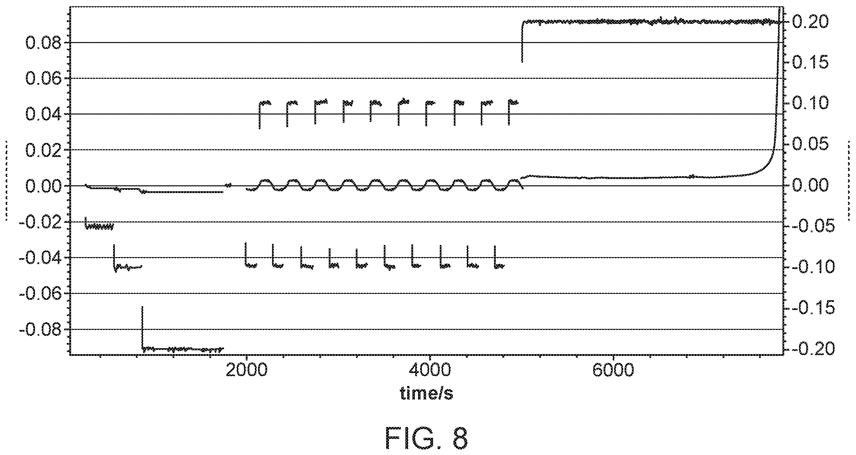

FIG. 8 shows a lithium plating and stripping experiment. In this Example, Lithium-stuffed garnet films were fabricated according to the method in FIG. 6. The films were characterized by an empirical formula Li₇La₃Zr₂O₁₂•Al₂O₃. The films were sintered between lithium-stuffed garnet setter plates at 1150°C for 6 hours. After sintering, the films were approximately 50 µm thick and circularly shaped with a top surface area of approximately 0.5 cm². These films were tested by conducting an initial plating step of Li at 0.1 mA/cm² (for 5 minutes), followed by a plating step of Li at 0.2 mA/cm² (for 5 minutes) and then followed by a plating step of Li at 0.4mA/cm² (for 15 minutes), followed by open-circuit voltage (OCV) steps for 2 minutes. This was followed by cycling step of 10 cycles of 0.2mA/cm² for 120s in each polarity, interspersed with an OCV step of 30s. A Final step including a full strip of Li at 0.4 mA/cm² was then performed. The data in Figure 8 was observed in a DC Test of a symmetric Li|Garnet|Li cell.

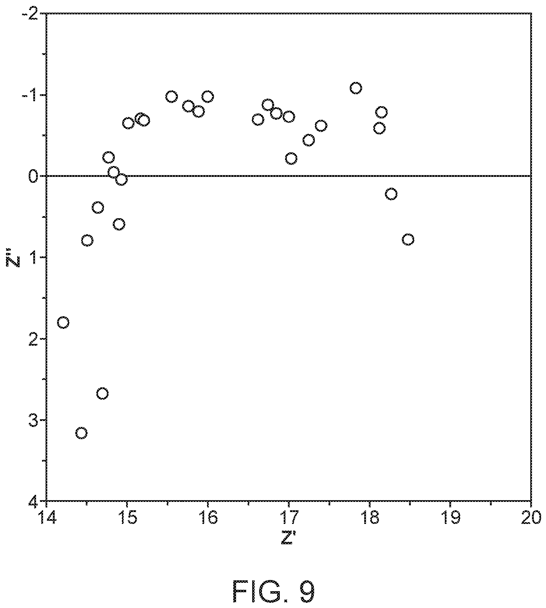

In another Example, lithium-stuffed garnet films were fabricated according to the method in FIG. 6. The films were characterized by an empirical formula Li₇La₃Zr₂O₁₂Al₂O₃. The films were sintered between lithium-stuffed garnet setter plates at 1150°C for 6 hours. After sintering, the films were approximately 50 µm thick and circularly shaped with a top surface area of approximately 0.5 cm². These films were tested as shown in FIG. 9, which shows an example EIS plot of the at 60°C. This plot demonstrates an ASR (area specific resistance) = (DC Impedance - AC Bulk Impedance)/2* Area = (22Q - 14.8Ω)/2*0.5 cm² = 1.8 Ω.cm². These results show surprisingly low impedance for Li-stuffed garnet solid electrolytes prepared using the garnet setter plates of the instant disclosure.

### SETTER PERFORMANCE

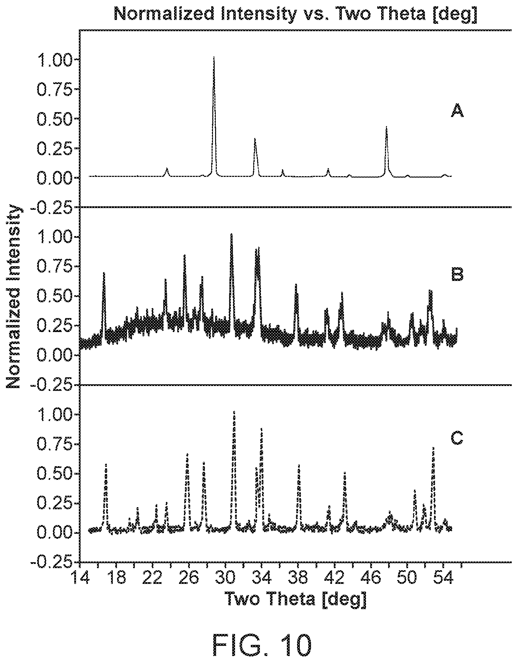

A series of green films were prepared as follows including garnet precursors to Li₇Li₃Zr₂O₁₂Al₂O₃ and were sintered between either ZrO₂ setter plates, Al₂O₃ setter plates or lithium stuffed garnet setter plates characterized by the composition Li₇Li₃Zr₂O₁₂Al₂O₃. As shown in FIG. 10 (top, part A), the film sintered between ZrO₂ setter plates did not retain the garnet crystal structure and evidenced a complete loss of this garnet phase. As shown in FIG. 10 (middle, part B), the film sintered between Al₂O₃ setter plates also did not retain the garnet crystal structure though some XRD reflections associated with garnet are observed. FIG 10, part B, also shows that some amorphous material was present post-sintering. However, as shown in FIG. 10 (bottom, part C), the film sintered between lithium stuffed garnet setter plates characterized by the composition Li₇Li₃Zr₂O₁₂Al₂O₃ did retain the garnet crystal structure. The results in parts A and B of FIG. 10 may be due to the loss of Li from the sintering green film on account of the difference in chemical potential for the Li in the sintering green film as compared to in either the ZrO₂ setter or in the Al₂O₃ setter.

### SETTER CONDITIONS

As described in Ikeda, Y., et al., Journal of Nuclear Materials 97 (1981) 47-58 and also Kato, Y, et al. Journal of Nuclear Materials 203 (1993) 27-35, various lithium containing oxides have a measureable Li vapor pressure. When heated, lithium compounds such as Li₂ZrO₃ and can volatilize and introduce gaseous species, such as but not limited to Li(g), LiO(g), Li₂O(g) and O₂(g). Other material, such as Li₅AlO₄ or LiAlO₂, LiAl₅O₈ can also volatize these species. The present disclosure finds that by using Li-stuffed garnet setter plates, the partial pressure of these species, such as Li, LiO(g), or Li₂O(g) can be maintained between 1 to 10⁻⁵ Pascal (Pa) range. In some examples, the partial pressure of the volatile Li species is 1 Pa. In some examples, the partial pressure of the volatile Li species is 10⁻¹ Pa. In some examples, the partial pressure of the volatile Li species is 10⁻² Pa. In some examples, the partial pressure of the volatile Li species is 10⁻³ Pa. In some examples, the partial pressure of the volatile Li species is 10⁻⁴ Pa. In some examples, the partial pressure of the volatile Li species is 10⁻⁵ Pa. This range has been found to be useful for maintaining the Li content in a sintering green film. In some examples, the setter plates used herein maintain, within a sintering over or furnace, a partial pressure of volatile Li species between.

## Claims

1. A setter plate for fabricating solid electrolytes of a rechargeable battery,
wherein the setter plate is a composite setter plate, said composite setter plate comprising an inert refractory material and a lithium source material; wherein the setter has a mass areal density of about 0.2 g/cm² to about 4 g/cm², wherein the inert refractory material is at least one member selected from Al₂O₃, LiAlO₂, LaAlO₃, ZrO₂, La₂O₃, Li₂ZrO₂, Li₂TiO₃ or the derivatives thereof, and
wherein the lithium source material is lithium-stuffed garnet oxide **characterized by** the formula LiₓLa_{y}Zr_{z}Oₜ·qAl₂O₃, wherein 4<x<10, 1<y<4, 1<z<3, 6<t<14, and 0≤q≤1.

2. The setter plate of claim 1, wherein q is selected from 0.35 or 1.

3. The setter plate of claim 1, wherein the lithium-stuffed garnet oxide is **characterized by** the formula Li₇La₃Zr₂O₁₂▪qAl₂O₃ wherein q is 0, 0.3, 0.35, 0.5, 0.75 or 1.0.

4. The setter plate of any one of claim 1 to claim 3 , wherein the setter plate porosity is from 10-50%.

5. The setter plate of any one of claims 1 to 4, wherein the setter plate density is from about 2.2 to 3 g/cm³.

6. The setter plate of any one of claims 1 to 5, wherein the setter plate has a surface flatness from about 0.1µm to about 50 µm.

7. A stack comprising at least two setter plates and a green film positioned in between the at least two setter plates, wherein one of the at least two setter plates is the setter plate of any one of claims 1 to 6.

8. A array comprising repeated units of the stack of claim 7.

9. The setter plate of any one of claims 1 to 4, wherein the setter plate has a surface roughness from 0.5 µm Rt to 30 µm Rt, wherein Rt is the maximum peak height of sampled surface roughness amplitudes.

10. The setter plate of any one of claims 1 to 4, wherein the setter plate comprises a lithium source material with lithium concentration greater than 0.02 mol/cm³ and a melting point above 1100 °C.

11. The setter plate of claim 10, having a surface defined by a first lateral dimension from 3 cm to 30 cm and a second lateral dimension from 3 cm to 30 cm; and
a thickness from 0.1 mm to 100 mm.

12. The setter plate of claim 1 having a flatness of between 0.5 µm and 20 µm.

## Patentansprüche

1. Brennhilfsmittel zur Herstellung von Festelektrolyten einer wiederaufladbaren Batterie, wobei das Brennhilfsmittel ein Verbundbrennhilfsmittel ist, wobei das Verbundbrennhilfsmittel ein inertes feuerfestes Material und ein Lithiumquellenmaterial umfasst; wobei die Brennhilfe eine Massenbereichsdichte von etwa 0,2 g/cm² bis etwa 4 g/cm² aufweist,
wobei das inerte feuerfeste Material zumindest ein Mitglied ausgewählt aus Al₂O₃, LiAlO₂, LaAlO₃, ZrO₂, La₂O₃, Li₂ZrO₂, Li₂TiO₃ oder den Derivaten davon ist, und
wobei das Lithiumquellenmaterial mit Lithium gefülltes Granatoxid ist, das durch die Formel LiₓLa_{y}Zr_{z}Oₜ·qAl₂O₃ gekennzeichnet ist, wobei 4<x<10, 1<y<4, 1<z<3, 6<t<14 und 0≤q≤1.

2. Brennhilfsmittel nach Anspruch 1, wobei q ausgewählt ist aus 0,35 oder 1.

3. Brennhilfsmittel nach Anspruch 1, wobei das mit Lithium gefüllte Granatoxid durch die Formel Li₇La₃Zr₂O₁₂▪qA1₂O₃ gekennzeichnet ist, wobei q 0, 0,3, 0,35, 0,5, 0,75 oder 1,0 ist.

4. Brennhilfsmittel nach einem von Anspruch 1 bis Anspruch 3, wobei die Brennhilfsmittelporosität 10-50 % ist.

5. Brennhilfsmittel nach einem der Ansprüche 1 bis 4, wobei die Brennhilfsmitteldichte etwa 2,2 bis 3 g/cm³ ist.

6. Brennhilfsmittel nach einem der Ansprüche 1 bis 5, wobei das Brennhilfsmittel eine Oberflächenflachheit von etwa 0,1 µm bis etwa 50 µm aufweist.

7. Stapel, umfassend zumindest zwei Brennhilfsmittel und eine Grünfolie, die zwischen den zumindest zwei Brennhilfsmitteln positioniert ist, wobei eines von den zumindest zwei Brennhilfsmitteln das Brennhilfsmittel nach einem der Ansprüche 1 bis 6 ist.

8. Array, das wiederholte Einheiten des Stapels nach Anspruch 7 umfasst.

9. Brennhilfsmittel nach einem der Ansprüche 1 bis 4, wobei das Brennhilfsmittel eine Oberflächenrauheit von 0,5 µm Rt bis 30 µm Rt aufweist, wobei Rt die maximale Spitzenhöhe von abgetasteten Oberflächenrauheitsamplituden ist.

10. Brennhilfsmittel nach einem der Ansprüche 1 bis 4, wobei das Brennhilfsmittel ein Lithiumquellenmaterial mit Lithiumkonzentration größer als 0,02 mol/cm³ und einem Schmelzpunkt über 1100 °C umfasst.

11. Brennhilfsmittel nach Anspruch 10, das eine Oberfläche aufweist, die durch eine erste laterale Abmessung von 3 cm bis 30 cm und eine zweite laterale Abmessung von 3 cm bis 30 cm; und
eine Dicke von 0,1 mm bis 100 mm definiert ist.

12. Brennhilfsmittel nach Anspruch 1, die eine Flachheit zwischen 0,5 µm und 20 µm aufweist.

## Revendications

1. Plaque d'enfournement pour la fabrication d'électrolytes solides d'une batterie rechargeable, dans laquelle la plaque d'enfournement est une plaque d'enfournement composite, ladite plaque d'enfournement composite comprenant un matériau réfractaire inerte et un matériau source de lithium ; dans laquelle la plaque d'enfournement présente une masse surfacique d'environ 0,2 g/cm² à environ 4 g/cm², dans laquelle le matériau réfractaire inerte est au moins un élément choisi parmi Al₂O₃, LiAlO₂, LaAlO₃, ZrO₂, La₂O₃, Li₂ZrO₂, Li₂TiO₃ ou leurs dérivés, et
dans laquelle le matériau source de lithium est de l'oxyde de grenat chargé en lithium **caractérisé par** la formule LiₓLa_{y}Zr_{z}Oₜ·qAl₂O₃ dans laquelle 4<x<10, 1<y<4, 1<z<3, 6<t<14, et 0≤q≤1.

2. Plaque d'enfournement de la revendication 1, dans laquelle q est choisi parmi 0,35 ou 1.

3. Plaque d'enfournement de la revendication 1, dans laquelle l'oxyde de grenat chargé en lithium est **caractérisé par** la formule Li₇La₃Zr₂O₁₂·qAl₂O₃ dans laquelle q est 0, 0,3, 0,35, 0,5, 0,75 ou 1,0.

4. Plaque d'enfournement de l'une quelconque des revendications 1 à 3, dans laquelle la porosité de la plaque d'enfournement est de 10 à 50 %.

5. Plaque d'enfournement de l'une quelconque des revendications 1 à 4, dans laquelle la densité de plaque d'enfournement est d'environ 2,2 à 3 g/cm³.

6. Plaque d'enfournement de l'une quelconque des revendications 1 à 5, dans laquelle la plaque d'enfournement présente une planéité de surface d'environ 0,1 µm à environ 50 µm.

7. Empilement comprenant au moins deux plaques d'enfournement et un film vert positionné entre les au moins deux plaques d'enfournement, dans lequel l'une des au moins deux plaques d'enfournement est la plaque d'enfournement de l'une quelconque des revendications 1 à 6.

8. Réseau comprenant des unités répétées de l'empilement de la revendication 7.

9. Plaque d'enfournement de l'une quelconque des revendications 1 à 4, dans laquelle la plaque d'enfournement présente une rugosité de surface de 0,5 µm Rt à 30 µm Rt, dans laquelle Rt est la hauteur de pic maximale d'amplitudes de rugosité de surface échantillonnées.

10. Plaque d'enfournement de l'une quelconque des revendications 1 à 4, dans laquelle la plaque d'enfournement comprend un matériau source de lithium avec une concentration en lithium supérieure à 0,02 mol/cm³ et un point de fusion supérieur à 1 100 °C.

11. Plaque d'enfournement de la revendication 10, présentant une surface définie par une première dimension latérale de 3 cm à 30 cm et une seconde dimension latérale de 3 cm à 30 cm ; et une épaisseur de 0,1 mm à 100 mm.

12. Plaque d'enfournement de la revendication 1, présentant une planéité comprise entre 0,5 µm et 20 µm.
